# EUROPÄISCHE PATENTSCHRIFT

(11) **EP 1 681 091 B1**
(45) Veröffentlichungstag und Bekanntmachung des Hinweises auf die Patenterteilung: **01.10.2008**
(21) Anmeldenummer: 06000205.2
(22) Anmeldetag: 05.01.2006
(51) Int. Cl.: B01J 8/06

(54) **Rohrbündelreaktor zur Durchführung exothermer oder endothermer Gasphasenreaktionen**
Reactor with tube bundle for carrying out exothermal or endothermal reactions
Reacteur tubulaire pour effectuer des reactions exothermes ou endothermes

(30) Priorität: 14.01.2005 DE 102005001952
(43) Veröffentlichungstag der Anmeldung: 19.07.2006
(73) Patentinhaber: MAN DWE GmbH, 94469 Deggendorf (DE)
(72) Erfinder: Lehr, Manfred, 94469 Deggendorf (DE)
(74) Vertreter: Paustian, Othmar

(56) Entgegenhaltungen:
- EP-A- 1 466 883
- WO-A-03/072237
- WO-A-20/04067165
- GB-A- 1 134 318
- US-A1- 2003 173 062
- US-A1- 2004 102 530
- US-A1- 2004 115 118
- US-A1- 2004 115 119
- US-B1- 6 756 023

## Beschreibung

Die Erfindung bezieht sich auf Rohrbündelreaktoren zur Durchführung exothermer oder endothermer Gasphasenreaktionen, mit einem Rohrbündel katalysatorgefüllter Reaktionsrohre, die von Reaktionsgas durchströmt werden und eine Reaktionszone durchlaufen, in der sie von einem flüssigen Wärmeträger umströmt werden und in der eine Vielzahl von sich quer zur Reaktionsrohr-Längsrichtung erstreckenden Umlenkblechen angeordnet ist, die Bohrungen aufweisen, durch die hindurch sich die Reaktionsrohre erstrecken.

Im Rahmen dieser Anmeldung sollen unter dem Begriff "Reaktionsgas" auch Reaktionsgasgemische verstanden werden, die als Komponenten mehrere Reaktionsgase enthalten.

Für die Auslegung und den Betrieb von Rohrbündelreaktoren gibt es eine Reihe von Einflussfaktoren, die entscheidend für die Wirtschaftlichkeit und die Produktqualität sind. Wichtige Einflussfaktoren sind vor allem bei Reaktionen mit einer starken Wärmetönung ein hoher Wärmeübergang zwischen Reaktionsrohr und Wärmeträger an der Außenseite des Reaktionsrohrs in Verbindung mit einem möglichst geringen Temperaturunterschied im Wärmeträger in jeder Querschnittsebene durch das Rohrbündel senkrecht zur Reaktionsrohr-Längsrichtung. Dadurch wird eine homogene Temperaturverteilung an der Reaktionsrohrinnenwand in jeder Querschnittsebene erreicht und somit ein einheitlicher Reaktionsablauf im Rohrbündel gewährleistet, d.h. alle Reaktionsrohre eines Rohrbündels - ein moderner Rohrbündelreaktor kann 30.000 Reaktionsrohre oder noch mehr enthalten - weisen dann weitestgehend das selbe Temperaturprofil des Reaktionsgases entlang der Reaktionsrohrachse auf. Dadurch wird eine hohe Ausbeute und gute Selektivität des Reaktionsproduktes erzielt. Weiterhin ist insbesondere bei exothermen Oxidationsreaktionen ein hoher wärmeträgerseitiger Wärmeübergangskoeffizient erforderlich, um bei nichtplanmäßigem Reaktionsablauf (run-away-Reaktionen) eine ausreichende Kühlwirkung zu gewährleisten und damit Schäden zu vermeiden. Eine möglichst gleichmäßige Temperaturverteilung in jeder Querschnittsebene und möglichst gleiche und gute Wärmeübergangswerte für alle Reaktionsrohre werden durch geeignete Anströmverhältnisse geschaffen. Hierzu sind eine Reihe von Maßnahmen bekannt.

So ist es aus dem US-Patent Nr. 4,398,595 bekannt, zur Verbesserung des Wärmeübergangs Rippenrohre als Reaktionsrohre einzusetzen und die Turbulenz im Wärmeträger durch Stäbe zu erhöhen, die das Rohrbündel senkrecht zur Reaktionsrohr-Längsrichtung ganz oder teilweise durchlaufen. Diese Stäbe können auch rechtwinklig zueinander angeordnet sein. Nachteilig ist dabei, dass das Reaktionsrohrmuster rechteckig sein muss und somit eine kleinere Rohrdichte als bei einer Dreiecksteilung in Kauf genommen werden muss. Durch die in den Gassen zwischen den Reaktionsrohrreihen gelegenen Stäbe ist zudem die Rohrteilung nach unten beschränkt bzw. der Rohrabstand groß.

In DE 100 24 348 A1 wird zur Erhöhung der Turbulenz vorgeschlagen, den Raum zwischen den Reaktionsrohren mit Füllkörpern zu füllen. Damit ist zwar die Anordnung der Rohre und die Rohrteilung nicht mehr beschränkt, jedoch sind bei dieser Lösung die mittleren Strömungsquerschnitte sehr stark verengt. Da einerseits Verunreinigungen im Wärmeträger oft nicht zu vermeiden sind und andererseits die Füllkörper-Schüttung aufgrund der stark verengten Strömungsquerschnitte wie ein Filter wirkt, besteht die Gefahr von Verstopfungen, die ungleichmäßige Durchströmung, lokale Überhitzung oder Unterkühlung, erhöhten Druckverlust und somit große Temperaturunterschiede senkrecht zur Längsrichtung der Reaktionsrohre bewirken können.

Bei diesen bekannten Rohrbündelreaktoren soll - wie es für die meisten Anwendungen günstig ist - durch hohe Umwälzmengen des Wärmeträgers auch in Reaktionsrohr-Längsrichtung der Temperaturunterschied möglichst gering gehalten werden, d. h. im gesamten Reaktor sollen annähernd gleiche, idealerweise isotherme Verhältnisse herrschen.

Es ist jedoch für eine Reihe von exothermen und endothermen Reaktionen wünschenswert, dass die Temperatur vom gaseintrittsseitigen Ende der Reaktionsrohre zu deren gasaustrittsseitigen Ende hin ansteigt bzw. abfällt, da sich ein solches Temperaturprofil positiv auf z.B. die Reaktionsgeschwindigkeit, den Umsatz, die Ausbeute und die Selektivität auswirkt.

Diese Forderung nach einer höheren oder niedrigeren Temperatur an den gasaustrittsseitigen Enden der Reaktionsrohre wird erfüllt durch bereits bekannte Mehrzonen-Reaktoren oder durch mehrere hintereinandergeschaltete getrennte Reaktoren, wobei in jeder Zone bzw. in jedem Reaktor bei jeweils annähernd isothermen Verhältnissen eine einzelne Reaktion durchgeführt wird. Nachteilig bei diesen Lösungen ist, dass sie aufwendig und teuer sind.

Ebenfalls bekannt ist es, z.B. aus EP 0 700 714 A1 oder EP 0 700 893 A1, einen herkömmlichen exothermen Einzonen-Reaktor, bei dem der Wärmeträger mittels horizontal verlaufender Umlenkbleche mäanderförmig durch das Rohrbündel geführt wird, so zu betreiben, dass die Temperatur des Wärmeträgers vom Eintritt in den Reaktor bis zum Austritt aus dem Reaktor um 2 bis 10°C, bevorzugt um 3 bis 6°C ansteigt. Dieses wird erreicht, indem die Strömungsgeschwindigkeit des Wärmeträgers entsprechend bemessen, d. h. reduziert wird. Dabei wird darauf hingewiesen, dass mit abnehmender Pumpleistung die Inhomogenitäten im Temperaturprofil über den Querschnitt des Reaktors zunehmen und daher aus Stabilitätsgründen eine Temperaturdifferenz von lediglich 3 bis 6°C bevorzugt wird. Das bedeutet, die in Reaktionsrohr-Längsrichtung wünschenswerten größeren Temperaturdifferenzen treten auch - unerwünscht - im Querschnitt des Rohrbündels auf.

Zur Verringerung der Temperaturdifferenzen über den Querschnitt des Rohrbündels ist es bekannt, das Reaktionsgas vor dessen Eintritt in die Reaktionszone auf die Temperatur des Wärmeträgers bei dessen Eintritt in den Rohrbündelreaktor vorzuwärmen, da das zugeführte Reaktionsgas meist deutlich kühler ist als der zugeführte Wärmeträger.

In DE 100 24 348 A1 wird hierfür ein dem Rohrbündelreaktor vorgeschalteter Wärmetauscher vorgeschlagen. Diese Lösung ist aufwendig, da ein separater Apparat mit eigenem Wärmeträgerkreislauf und entsprechenden Regel- und Umwälzeinrichtungen erforderlich ist. Alternativ ist auch eine elektrische Vorwärmung bekannt, die jedoch teuer und oft aus Explosionsschutzgründen nicht möglich ist.

Aus EP 0 700 714 A1 und EP 0 700 893 A1 ist eine im Rohrbündelreaktor angeordnete Vorwärmzone bekannt. Hier erfolgt die Vorwärmung in den Reaktionsrohren selbst, indem das Reaktionsgas zunächst z. B. eine Inertpartikelschüttung durchströmt. Die negativen Auswirkungen auf die Temperaturverteilung im Wärmeträger können durch zusätzliche Einrichtungen, wie z. B. einen zentralen Bypass, reduziert werden.

Bei geringen Umwälzmengen reichen die bekannten Maßnahmen jedoch nicht mehr aus, große Temperaturunterschiede im Wärmeträger in der Querschnittsebene zu vermeiden, wie auch den - bereits weiter oben erwähnten - Hinweisen in der EP 0 700 714 A1 und der EP 0 700 893 A1 auf Inhomogenitäten im Temperaturprofil quer zur Reaktionsrohr-Längsrichtung zu entnehmen ist.

In den Dokumenten US 2004/115118 A1 und US 2004/115119 A1 sind für Rohrbündelreaktoren mit Umlenkblechen Abmessungsbereiche angegeben, beispielsweise für die Länge der Reaktionsrohre und den Innendurchmesser von Reaktoren (der näherungsweise dem Rohrbündeldurchmesser entspricht), die sämtliche üblichen Abmessungen abdecken, wobei auch die als besonders bevorzugt angegebenen Abmessungsbereiche den Abmessungen der am häufigsten gefertigten Rohrbündelreaktoren entsprechen. Die für Umlenkbleche angegebene bevorzugte Anzahl entspricht ebenfalls bekannten werten. Eine klare technische Lehre zur Ausgestaltung konkreter Rohrbündelreaktoren erhält der Fachmann dadurch jedoch nicht. Vielmehr erfährt er lediglich, in welchen Dimensionierungsbereichen sich die einzelnen Komponenten von Rohrbündelreaktoren bewegen können.

Demgegenüber liegt die Aufgabe der vorliegenden Erfindung darin, einen gattungsgemäßen Rohrbündelreaktor so zu verbessern, dass kleinere Wärmeträger-Umwälzmengen gefahren werden können, d. h. größere Temperaturdifferenzen in Reaktionsrohr-Längsrichtung zu erzielen sind, und dabei der Wärmeübergang ausreichend groß und die Temperaturdifferenzen über den Querschnitt des Rohrbündels ausreichend klein bleiben.

Erfindungsgemäß wird diese Aufgabe bei einem Rohrbündelreaktor der eingangs genannten Art dadurch gelöst, dass die Umlenkbleche in Längsrichtung der Reaktionsrohre und/oder in deren Umfangsrichtung jeweils mit einem lichten Abstand zueinander angeordnet sind, der höchstens so groß ist, dass das Verhältnis des Durchmessers eines durch die radial außenliegenden Reaktionsrohre gezogenen Kreises zu jedem lichten Abstand mindestens 13 beträgt.

Durch die erfindungsgemäßen Maßnahmen können Rohrbündelreaktoren mit einer solch geringen Wärmeträger-Umwälzmenge und damit mit einer solch großen Temperaturdifferenz in Reaktionsrohr-Längsrichtung gefahren werden, die im Stand der Technik aufgrund der dort auftretenden großen Temperaturunterschiede über den Querschnitt des Rohrbündels als nicht durchführbar angesehen worden sind. Mit der erfindungsgemäßen Gestaltung und Anordnung von Strömungseinbauten wird sowohl der Wärmeübergangskoeffizient wesentlich verbessert als auch die Temperaturverteilung quer zur Reaktionsrohr-Längsrichtung deutlich vergleichmäßigt. Es hat sich herausgestellt, dass ein geeignetes Größenverhältnis von lichtem Abstand der Strömungseinbauten untereinander zu den Außenabmessungen des Rohrbündels zum Zusammenwirken wenigstens zweier der Effekte Erhöhung der Durchströmungsgeschwindigkeit/Erhöhung der Turbulenz/Vergrößerung der Wärmeübertragungsfläche führt und nicht nur auf die Verbesserung des Wärmeübergangskoeffizienten einen signifikanten Einfluß hat, sondern auch zu einer Vergleichmäßigung des Wärmeübergangs und damit zu einer Vergleichmäßigung der Temperaturverteilung an der Reaktionsrohrinnenwand quer zur Reaktionsrohr-Längsrichtung führt. Es hat sich gezeigt, dass ab einem solchen Größenverhältnis von mindestens 13 auch bei relativ großen Temperaturdifferenzen in Längsrichtung der Reaktionsrohre quer zu diesen eine Temperaturverteilung erzielt wird, die deutlich gleichmäßiger ist als bei vorbekannten Rohrbündelreaktoren.

Als unterstützende Maßnahme bei der Vergleichmäßigung der Temperaturverteilung quer zur Reaktionsrohr-Längsrichtung wird bei einem Rohrbündelreaktor der eingangs genannten Art, dessen Rohrbündel von einem Reaktormantel umgeben ist und bei dem die einen Enden der Reaktionsrohre von einer Gaseintrittshaube und deren andere Enden von einer Gasaustrittshaube überspannt werden und die Reaktionsrohre nahe der Gaseeintrittshaube eine Vorwärmzone und anschließend eine Reaktionszone durchlaufen, wobei die Vorwärmzone und die anschließende Reaktionszone im Bereich des Rohrbündels durch ein Trennblech voneinander getrennt sind und beide jeweils von einem Wärmeträgerstrom durchströmt werden, vorgeschlagen, dass das Trennblech mit den Reaktionsrohren weitestgehend flüssigkeitsdicht verbunden ist und im wesentlichen derselbe Wärmeträgerstrom zunächst die Vorwärmzone und dann die anschließende Reaktionszone durchströmt. Durch diese bevorzugten Maßnahmen wird eine Angleichung der Temperaturen von Reaktionsgas und Wärmeträger erreicht. Die Angleichung der Temperaturen, idealerweise bis zu deren vollständigen Gleichheit, bewirkt eine äußerst homogene Temperaturverteilung im Wärmeträger im Anfangsbereich der Reaktionszone, da irgendwelche Rückkühlungen des Wärmeträgers und daraus resultierende Inhomogenitäten der Temperaturverteilung möglichst gering gehalten und idealerweise vollständig vermieden werden. Durch Verwendung desselben Wärmeträgerstroms für die Vorwärmzone und die Reaktionszone verringert sich der technische Aufwand, da kein separater Wärmeträgerkreislauf mit den entsprechend notwendigen Umwälz-, Heiz- und Regeleinrichtungen erforderlich ist.

In Fällen, in denen das zugeführte Reaktionsgas wärmer ist als der zugeführte Wärmeträger, wirkt die "Vorwärmzone" als Kühlzone.

Die Erfindung wird nachfolgend anhand der Zeichnungen beispielshalber noch näher erläutert. Es zeigen:
- Figur 1: einen Längsschnitt durch eine erste Ausführungsform eines erfindungsgemäßen Rohrbündelreaktors;
- Figur 2: einen Längsschnitt durch eine zweite Ausführungsform eines erfindungsgemäßen Rohrbündelreaktors;
- Figuren 3a, b: eine Teil-Seitenansicht einer Gruppe von Reaktionsrohren und einen Querschnitt durch diese Gruppe, mit einer ersten Ausführungsform von erfindungsgemäßen Strömungseinbauten;
- Figuren 4a, b: eine Teil-Seitenansicht einer Gruppe von Reaktionsrohren und einen Querschnitt durch diese Gruppe, mit einer zweiten Ausführungsform von erfindungsgemäßen Strömungseinbauten;
- Figuren 5a, b: eine Teil-Seitenansicht einer Gruppe von Reaktionsrohren und einen Querschnitt durch diese Gruppe, mit einer dritten Ausführungsform von erfindungsgemäßen Strömungseinbauten;
- Figuren 6a, b: eine Teil-Seitenansicht einer Gruppe von Reaktionsrohren und einen Querschnitt durch diese Gruppe, mit einer vierten Ausführungsform von erfindungsgemäßen Strömungseinbauten;
- Figuren 7a, b: eine Teil-Seitenansicht einer Gruppe von Reaktionsrohren und einen Querschnitt durch diese Gruppe, mit einer fünften Ausführungsform von erfindungsgemäßen Strömungseinbauten;
- Figuren 8a, b: eine Teil-Seitenansicht einer Gruppe von Reaktionsrohren und einen Querschnitt durch diese Gruppe, mit einer sechsten Ausführungsform von erfindungsgemäßen Strömungseinbauten;
- Figuren 9a, b: eine Teil-Seitenansicht einer Gruppe von Reaktionsrohren und einen Querschnitt durch diese Gruppe, mit einer siebten Ausführungsform von erfindungsgemäßen Strömungseinbauten;
- Figuren 10a, b: eine Teil-Seitenansicht einer Gruppe von Reaktionsrohren und einen Querschnitt durch diese Gruppe, mit einer achten Ausführungsform von erfindungsgemäßen Strömungseinbauten;
- Figur 10c: in vergrößerter Darstellung einen Längsschnitt längs Linie Xc-Xc in Figur 10a;
- Figuren 11a, b: eine Teil-Seitenansicht einer Gruppe von Reaktionsrohren und einen Querschnitt durch diese Gruppe, mit einer neunten Ausführungsform von erfindungsgemäßen Strömungseinbauten;
- Figur 11c: links eine halbe Vorderansicht und rechts einen halben Längsschnitt der in den Figuren 11a und 11b dargestellten Strömungseinbauten;
- Figuren 12a, b: eine Teil-Seitenansicht einer Gruppe von Reaktionsrohren und einen Querschnitt durch diese Gruppe, mit einer zehnten Ausführungsform von erfindungsgemäßen Strömungseinbauten;
- Figuren 13a, b: eine Teil-Seitenansicht einer Gruppe von Reaktionsrohren und einen Querschnitt durch diese Gruppe, mit einer elften Ausführungsform von erfindungsgemäßen Strömungseinbauten;
- Figur 14: einen Längsschnitt durch eine dritte Ausführungsform eines erfindungsgemäßen Rohrbündelreaktors:
- Figur 14b: in einer perspektivischen Darstellung die spiralförmigen Strömungseinbauten im Ringraum I aus Figur 14a;
- Figur 14c: einen Längsschnitt längs Linie XIVc-XIVc in Figur 14b;
- Figuren 15a, b, c: Teil-Seitenansichten der spiralförmigen Strömungseinbauten der Ringräume I, II und III aus Figur 14a bei Abwicklung des Reaktormantels;
- Figur 16a: in schematischer Darstellung eine Draufsicht auf eine weitere Ausführungsform spiralförmiger Strömungseinbauten;
- Figur 16b: in schematischer Darstellung eine perspektivische Teilansicht der Strömungseinbauten aus Figur 16a;
- Figur 17a: einen Teil-Längsschnitt durch eine vierte Ausführungsform eines erfindungsgemäßen Rohrbündelreaktors, längs Linie XVIIa-XVIIa in Figur 17b;
- Figur 17b: einen Querschnitt durch den Rohrbündelreaktor aus Figur 17a, längs Linie XVIIb-XVIIb;
- Figur 18a: einen Teil-Längsschnitt durch eine fünfte Ausführungsform eines erfindungsgemäßen Rohrbündelreaktors, längs Linie XVIIIa-XVIIIa in Figur 18b;
- Figur 18b: einen Querschnitt durch den Rohrbündelreaktor aus Figur 18a, längs Linie XVIIIb-XVIIIb;
- Figur 19: einen Teil-Längsschnitt durch eine sechste Ausführungsform eines erfindungsgemäßen Rohrbündelreaktors;
- Figur 20: ein Fließbild für ein erstes Ausführungsbeispiel eines Wärmeträgerkreislaufes für einen erfindungsgemäßen Rohrbündelreaktor; und
- Figur 21: ein Fließbild für ein zweites Ausführungsbeispiel eines Wärmeträgerkreislaufes für einen weiteren erfindungsgemäßen Rohrbündelreaktor.

Die in den Figuren dargestellten Ausführungsbeispiele erfindungsgemäßer Rohrbündelreaktoren 1 weisen ein Bündel 2 katalysatorgefüllter Reaktionsrohre 3 auf, die von einem Reaktormantel 4 umschlossen sind. Die gaseintrittsseitigen Enden 5 der Reaktionsrohre 3 durchlaufen einen ersten Rohrboden 6 und sind in diesem gas- und flüssigkeitsdicht befestigt. Den ersten Rohrboden 6 bzw. die gaseintrittsseitigen Enden 5 der Reaktionsrohre 3 überspannt eine Gaseintrittshaube 7. Die gasaustrittsseitigen Enden 8 der Reaktionsrohre 3 durchlaufen einen zweiten Rohrboden 9 und sind in diesem ebenfalls gas-und flüssigkeitsdicht befestigt. Der zweite Rohrboden 9 bzw. die gasaustrittsseitigen Enden 8 der Reaktionsrohre 3 werden von einer Gasaustrittshaube 10 überspannt.

Die Reaktionsrohre 3 durchlaufen eine sich an den ersten, in den Figuren oberen Rohrboden 6 anschließende Vorwärmzone 11 und dann eine sich an die Vorwärmzone 11 anschließende Reaktionszone 12. In der Reaktionszone 12 sind die Reaktionsrohre 3, gegebenenfalls teilweise, mit Katalysatormaterial gefüllt, in der Vorwärmzone 11 mit Inertmaterial. Die Vorwärmzone 11 und die anschließende Reaktionszone 12 sind im Bereich des Rohrbündels 2 durch ein Trennblech 13 voneinander getrennt. Das Trennblech 13 ist mit den Reaktionsrohren 3 weitestgehend flüssigkeitsdicht verbunden. Der Begriff "weitestgehend" soll besagen, dass die Reaktionsrohre 3 mit ihren Außenseiten dicht an den Wandungen der Durchtrittsbohrungen im Trennblech 13 anliegen, jedoch aus fertigungstechnischen Gründen nicht immer mit dem Trennblech 13 verschweißt sind, so dass minimale Leckagen nicht ausgeschlossen sind. Demgegenüber sind die Reaktionsrohre 3 mit den Rohrböden 6, 9 verschweißt, um eine absolute Dichtigkeit gegen Gas- und Flüssigkeitsleckagen zu gewährleisten.

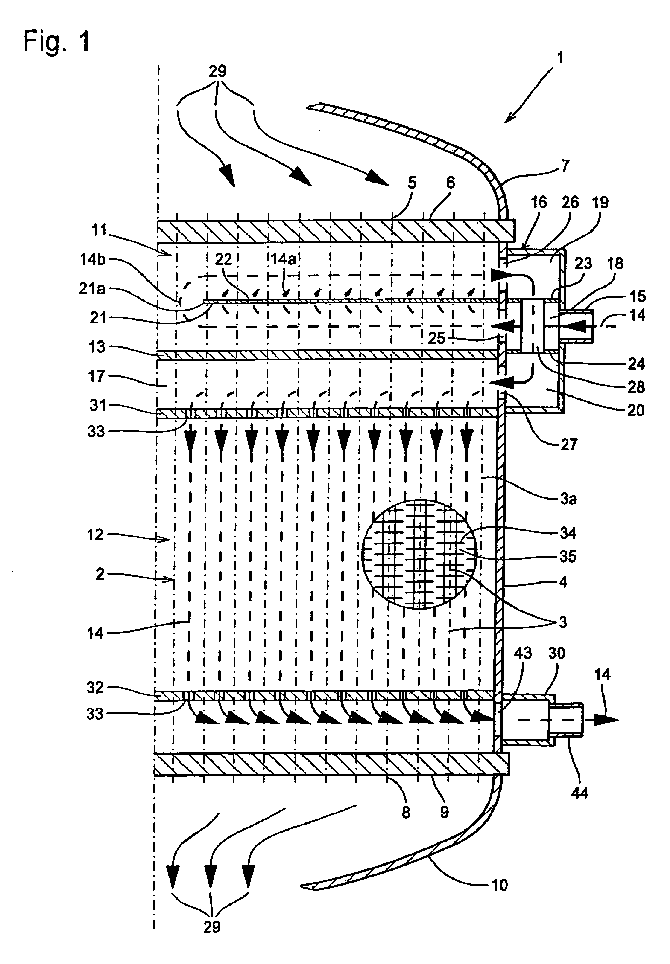

Bei dem in Figur 1 dargestellten Ausführungsbeispiel wird der Wärmeträgerstrom 14 zunächst mittels einer Wärmeträger-Zuleitung 15 in einen Ringkanal 16 geleitet, der den Reaktormantel 4 im Bereich der Vorwärmzone 11 und des anschließenden Anfangsbereichs 17 der Reaktionszone 12 umschließt. Der Ringkanal 16 ist in Reaktionsrohr-Längsrichtung in drei Teil-Ringkanäle 18, 19, 20 unterteilt.

In der Vorwärmzone 11 ist ein ringförmiges Umlenkblech 21 angeordnet, das an der Innenwandung des Reaktormantels 4 befestigt ist. In dem ringförmigen Umlenkblech 21 sind Durchtrittsöffnungen 22 ausgebildet, die in vorgegebenen, im dargestellten Ausführungsbeispiel in radialer Richtung konstanten Achsabständen zueinander angeordnet sind und deren Durchmesser radial einwärts zunehmen.

Die Teil-Ringkanäle 18, 19, 20 sind durch zwei Teilungsbleche 23, 24 voneinander flüssigkeitsdicht getrennt, deren eines 23 sich in Verlängerung des ringförmigen Umlenkbleches 21 und dessen anderes sich in Verlängerung des Trennbleches 13 über die gesamte radiale Breite des Ringkanals 16 erstreckt. Der erste, mittlere Teil-Ringkanal 18 steht einerseits mit der Wärmeträger-Zuleitung 15 und andererseits über erste Fenster bzw. Öffnungen 25 im Reaktormantel 4 mit dem Bereich der Vorwärmzone 11 in Strömungsverbindung, der sich zwischen dem Trennblech 13 und dem Umlenkblech 21 befindet. Der zweite Teil-Ringkanal 19 steht über zweite Öffnungen 26 im Reaktormantel 4 mit dem Bereich der Vorwärmzone 11 in Strömungsverbindung, der sich zwischen dem Umlenkblech 21 und dem ersten Rohrboden 6 befindet. Der dritte Teil-Ringkanal 20 steht über dritte Öffnungen 27 im Reaktormantel 4 mit dem Anfangsbereich 17 der Reaktorzone 12 in Strömungsverbindung, der sich unmittelbar an das Trennblech 13 anschließt. Der zweite und der dritte Teil-Ringkanal 19, 20 stehen über Verbindungskanäle 28 miteinander in Strömungsverbindung, die sich zwischen den Teilungsblechen 23, 24 im Ringkanal 16 erstrecken und mit diesen flüssigkeitsdicht verbunden sind. Diese Verbindungskanäle 28 erstrecken sich somit außerhalb des Reaktormantels 4 durch den ersten mittleren Teil-Ringkanal 18. Die ersten, zweiten und dritten Öffnungen 25, 26, 27 sowie die Verbindungskanäle 28 sind jeweils in Umfangsrichtung in vorgegebenen Abständen zueinander angeordnet.

Der Wärmeträgerstrom 14 strömt von der Wärmeträger-Zuleitung 15 in den ersten, mittleren Teil-Ringkanal 18 und dort an den Verbindungskanälen 28 vorbei zu den ersten Öffnungen 25 im Reaktormantel 4. Nach Durchströmen der ersten Öffnungen 25 strömt der Wärmeträger 14 zwischen dem Umlenkblech 21 und dem Trennblech 13 radial einwärts, wobei Teilströme 14a des Wärmeträgers 14 durch die Durchtrittsöffnungen 22 im Umlenkblech 21 in den Bereich zwischen Umlenkblech 21 und ersten Rohrboden 6 strömen. Die Teilstromöffnungen 22 bewirken eine gleichmäßigere Geschwindigkeitsverteilung und damit einen möglichst geringen Druckverlust. Der verbleibende Teilstrom 14b des Wärmeträgers 14 wird am radial innenliegenden Rand 21a des Umlenkbleches 21 in den Bereich zwischen Umlenkblech 21 und ersten Rohrboden 6 umgelenkt. Der Wärmeträger 14 strömt wieder radial nach außen und durch die zweiten Öffnungen 26 im Reaktormantel 4 in den zweiten Teil-Ringkanal 19. Von dort strömt der Wärmeträger 14 durch die Verbindungskanäle 28 in den dritten Teil-Ringkanal 20 und von dort durch die dritten Öffnungen 27 im Reaktormantel 4 in den Anfangsbereich 17 der Reaktionszone 12. Damit strömt ein und derselbe Wärmeträgerstrom 14 zunächst durch die Vorwärmzone 11 und dann in die Reaktionszone 12.

Erfindungsgemäß wird der Wärmeträger 14 in der Vorwärmzone 11 unabhängig von der Strömungsführung in der Reaktionszone 12 im Radialstrom geführt. Hierdurch werden auf einfache konstruktive Weise trotz der geringen Umwälzmenge hohe Wärmeübergangswerte erreicht.

Durch die Unterteilung der Vorwärmzone 11 mit einem ringförmigen Umlenkblech 21 und die Gegenstromführung des Wärmeträgers 14 wird eine besonders gleichmäßige Vorwärmung des Reaktionsgases 29 über den Reaktorradius erreicht. In dem Bereich zwischen Umlenkblech 21 und erstem Rohrboden 6 findet die hauptsächliche Erwärmung des Reaktionsgases 29 statt, wobei aufgrund der hohen übertragenen Leistung Temperaturdifferenzen im Wärmeträger 14 und damit im Reaktionsgas 29 auftreten. Die Temperaturdifferenzen im Reaktionsgas 29 werden im Bereich zwischen Trennblech 13 und Umlenkblech 21 ausgeglichen, wofür nur noch eine geringe Leistung übertragen werden muß.

In der Vorwärmzone 11 wird also das in die Reaktionsrohre 3 eintretende Reaktionsgas 29 durch den Wärmeträger 14 vorgewärmt, wobei die Vorwärmzone 11 so ausgelegt ist bzw. die Wärmeübertragungsflächen - im dargestellten Ausführungsbeispiel die Reaktionsrohrlängen in der Vorwärmzone 11 - so angepaßt sind, dass die Temperatur des Reaktionsgases 29 und die des Wärmeträgers 14 beim Eintritt in die Reaktionszone 12 im wesentlichen gleich sind und möglichst kleine Temperaturdifferenzen innerhalb des Rohrbündelquerschnitts vorliegen.

In Strömungsrichtung unmittelbar nach den dritten Öffnungen 27 im Reaktormantel 4 und in Strömungsrichtung unmittelbar vor den Austrittsöffnungen 43 zu einem Ringkanal 30 und einer Wärmeträger-Ableitung 44 aus der Reaktionszone 12 ist jeweils ein Verteilerblech 31, 32 angeordnet, das eine Vielzahl von Durchgangslöchern 33 aufweist, durch die hindurch der Wärmeträgerstrom 14 unmittelbar nach seiner Zuführung aus dem Ringkanal 16 bzw. unmittelbar vor seiner Ableitung aus der Reaktionszone 12 tritt.

Am Eintritt des Wärmeträgers 14 in die Reaktionszone 12 können Temperaturmeßstellen zur Messung und Regelung der Temperatur des Wärmeträgers 14 angeordnet sein.

Die Verteilerbleche 31, 32 verlaufen senkrecht zur Reaktionsrohr-Längsrichtung. In diesem Ausführungsbeispiel sollten die Reaktionsrohre 3 nur in dem Raum zwischen den Verteilerblechen 31, 32 mit Katalysatormaterial gefüllt sein.

Die Durchgangslöcher 33 sind in radialer Richtung und in Umfangsrichtung in vorgegebenen Abständen zueinander angeordnet. In radialer Richtung nehmen die Durchmesser von außen nach innen zu, um über den gesamten Querschnitt des Rohrbündels 2 einen gleichmäßigen Volumenstrom des Wärmeträgers 14 entlang der Reaktionsrohre 3 zu bewirken.

In der Vorwärmzone 11 wird der Wärmeträger 14 - wie oben beschrieben - im Radialstrom und im Gegenstrom zum Reaktionsgas 29 geführt, während er in der Reaktionszone 12 im Längsstrom und im Gleichstrom zum Reaktionsgas 29 geführt wird.

Jedes Reaktionsrohr 3 ist an seiner Außenseite von einer Vielzahl von Strömungseinbauten 34 umgeben, die von der Außenseite radial vorragen. In Figur 1 sind diese Strömungseinbauten 34 in einem lupenförmigen Ausschnitt schematisch dargestellt. Die Strömungseinbauten 34 können punktförmig in Form von z. B. Noppen, Stiften oder Blechfahnen ausgebildet sein. Sie können auch linienförmig als z. B. Rippen ausgebildet sein, und sie können flächig als z. B. Umlenkbleche oder Strömungsleitbleche ausgebildet sein. Wesentlich ist in jedem Fall, dass sie in einem lichten Abstand 35 zueinander angeordnet sind, dessen Größe einen Maximalwert im Verhältnis zum Durchmesser eines durch die radial außenliegenden Reaktionsrohre 3a gezogenen Kreises, im Fall eines kreisförmigen Rohrbündels 2 also der Rohrbündelaußendurchmesser, nicht überschreitet. Das Verhältnis dieses Durchmessers zu jedem lichten Abstand 35 beträgt mindestens 13, im Fall der flächigen Strömungseinbauten 34 bevorzugt 15 und ganz besonders bevorzugt mindestens 20. Im Fall der punkt- und linienförmigen Strömungseinbauten 34 beträgt dieses Verhältnis bevorzugt 100 und besonders bevorzugt mindestens 200. Bei gleichen Strömungseinbauten 34 sind bei einem Rohrbündelreaktor 1, der mit einer größeren Umwälzmenge gefahren werden soll, die lichten Abstände 35 größer als bei einem Rohrbündelreaktor 1, der mit einer geringeren Umwälzmenge gefahren werden soll.

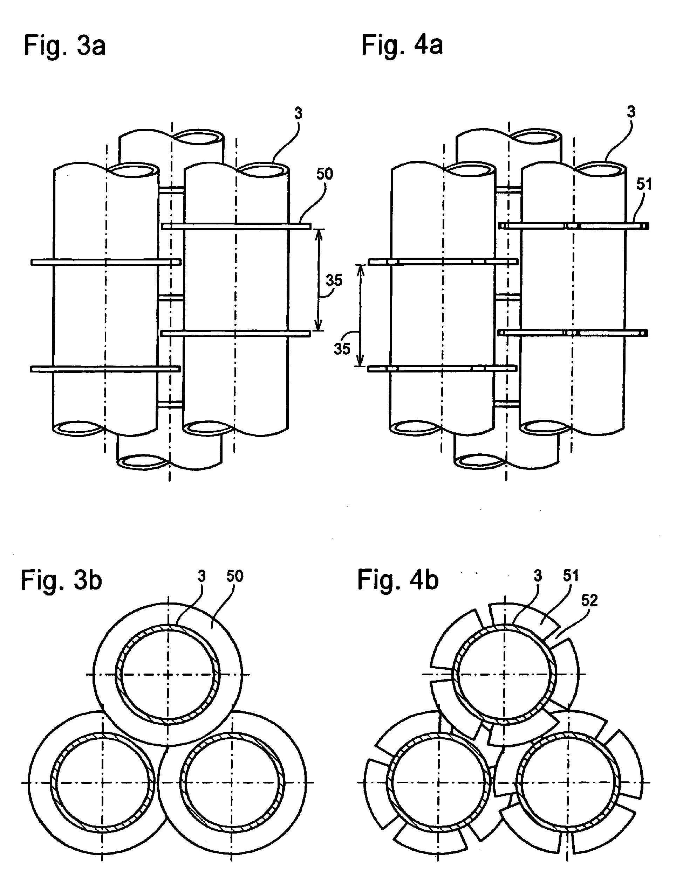

Ausführungsbeispiele für punktförmige und linienförmige Strömungseinbauten 34 sind in den Figuren 3 bis 13 dargestellt und werden weiter unten erläutert.

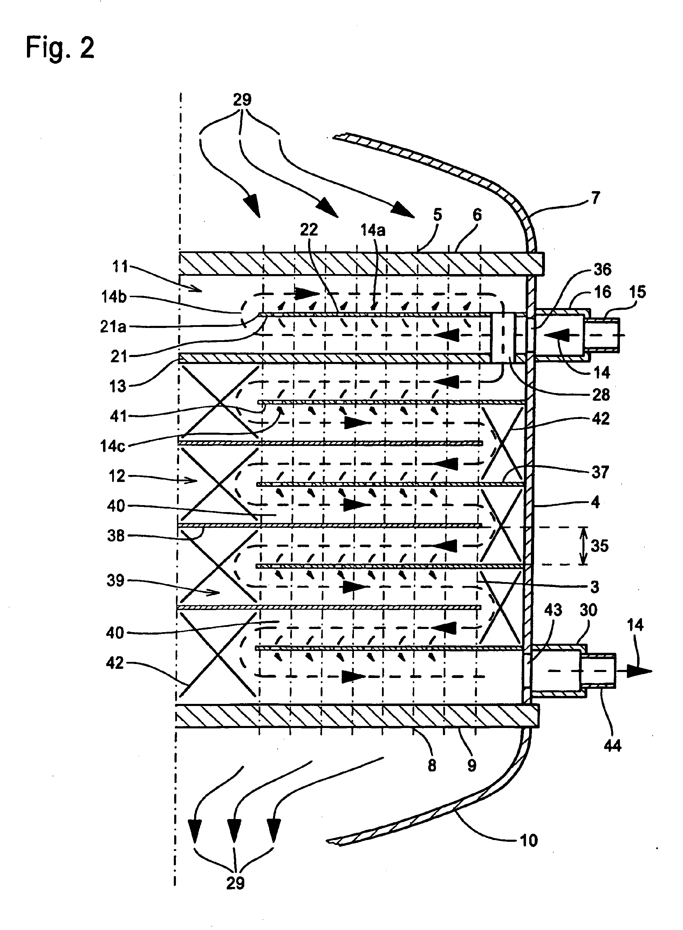

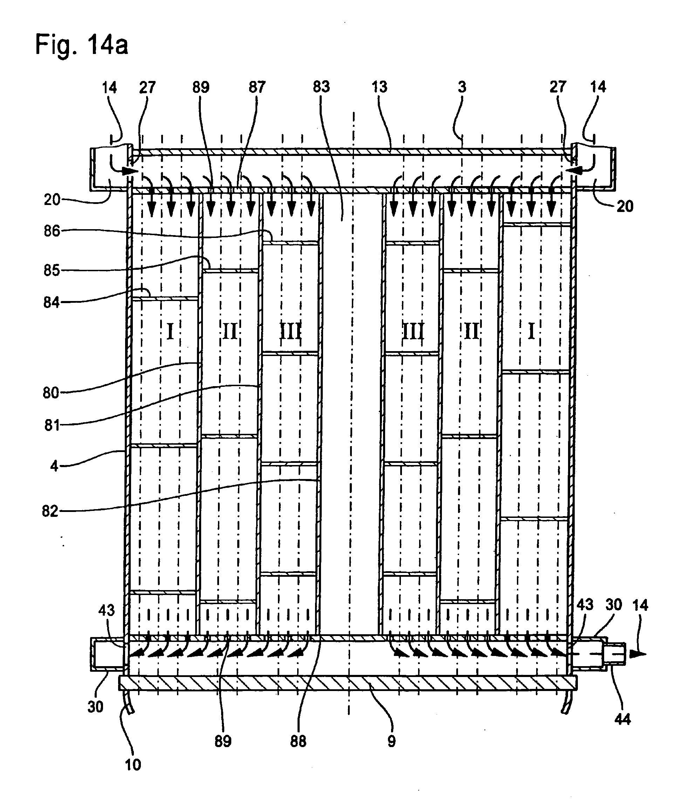

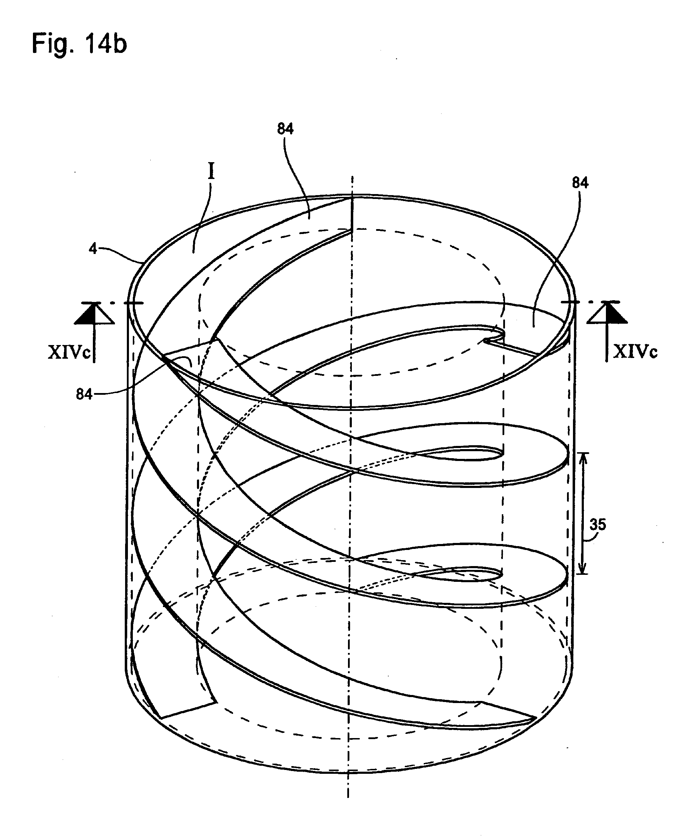

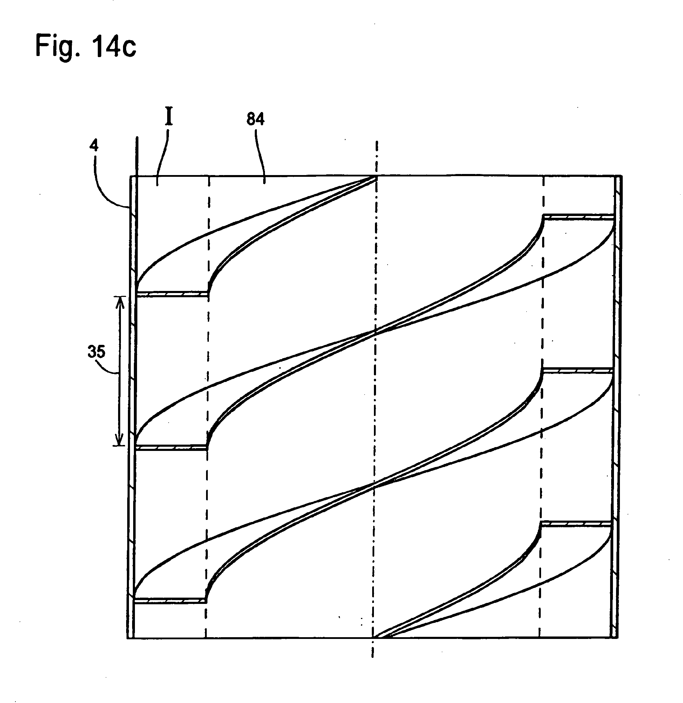

Die flächigen Strömungseinbauten 34 erstrecken sich quer zur Reaktionsrohr-Längsrichtung über mehrere Reaktionsrohre 3 hinweg. Ein Ausführungsbeispiel wird nachfolgend anhand von Figur 2 beschrieben. Weitere Ausführungsbeispiele werden weiter unten in Verbindung mit den Figuren 14 bis 16 näher erläutert.

Bei dem in Figur 2 dargestellten Ausführungsbeispiel ist in der Vorwärmzone 11 ähnlich wie im Ausführungsbeispiel gemäß Figur 1 ein ringförmiges Umlenkblech 21 angeordnet, das mit seinem radialen Außenrand an der Innenwandung des Reaktormantels 4 befestigt ist. In dem Reaktormantel 4 sind in dem Bereich zwischen Umlenkblech 21 und Trennblech 13 Eintrittsöffnungen 36 ausgebildet, durch die hindurch der Wärmeträger 14 aus einem Ringkanal 16, der an die Wärmeträger-Zuleitung angeschlossen ist, in die Vorwärmzone 11 eintritt. Radial au-βerhalb des Rohrbündels 2 erstrecken sich zwischen diesem und der Innenwandung des Reaktormantels 4, also innerhalb des Reaktormantels 4, von dem Umlenkblech 21 zu dem Trennblech 13 Verbindungskanäle 28, die in dem Umlenkblech 21 und in dem Trennblech 13 flüssigkeitsdicht befestigt sind und zwischen dem Bereich der Vorwärmzone 11, der zwischen Umlenkblech 21 und erstem Rohrboden 6 liegt, und dem Anfangsbereich 17 der Reaktionszone 12 eine Strömungsverbindung ausbilden. In dem Umlenkblech 21 sind ähnlich wie bei dem Ausführungsbeispiel gemäß Figur 1 Durchtrittsöffnungen 22 ausgebildet, um Teilströmen 14a des Wärmeträgers 14 ein Hindurchtreten zu ermöglichen.

Der Wärmeträger 14 tritt aus dem Ringkanal 16 durch die Eintrittsöffnungen 36 im Reaktormantel 4 in den Bereich der Vorwärmzone 11 zwischen Trennblech 13 und Umlenkblech 21 ein. Dort strömt er an den Verbindungskanälen 28 vorbei radial einwärts, wobei Teilströme 14a durch die Durchtrittsöffnungen 22 im Umlenkblech 21 in den Bereich zwischen Umlenkblech 21 und ersten Rohrboden 6 einströmen. Der verbleibende Wärmeträger-Teilstrom 14b strömt um den radial innenliegenden Rand 21a des Umlenkbleches 21 herum in den Bereich zwischen Umlenkblech 21 und ersten Rohrboden 6, in dem der Wärmeträger 14 wieder radial nach außen strömt. Durch die Verbindungskanäle 28 strömt der Wärmeträger 14 von der Vorwärmzone 11 in den Anfangsbereich 17 der Reaktionszone 12 nahe dem Trennblech 13.

In der Reaktionszone 12 sind in Reaktionsrohr-Längsrichtung abwechselnd ringförmige Umlenkbleche 37, die an ihrem radial außenliegenden Rand an der Innenwandung des Reaktormantels 4 befestigt sind, und scheibenförmige Umlenkbleche 38 angeordnet, die im rohrfreien inneren Bereich 39 befestigt sind. Das Verhältnis des Rohrbündelaußendurchmessers zu den lichten Abständen 35 der ring- und scheibenförmigen Umlenkbleche 37, 38 untereinander beträgt im dargestellten Ausführungsbeispiel etwa 15. Durch die Vielzahl an Umlenkblechen 37, 38 ergibt sich ein kleiner Strömungsquerschnitt, der auch bei relativ geringer Umwälzmenge zu einer großen Strömungsgeschwindigkeit durch das Rohrbündel 2 führt. Der Wärmeträger 14 strömt mäanderförmig entlang der miteinander abwechselnden ring-und scheibenförmigen Umlenkbleche 37, 38, die aufeinander folgende Durchströmungsabschnitte 40 ausbilden, und damit wiederholt von außen nach innen und von innen nach außen durch das Rohrbündel 2. Diese Querströmungen führen in Verbindung mit der hohen Strömungsgeschwindigkeit zu hohen Turbulenzen und damit zu einem hohen Wärmeübergang.

In diesem Ausführungsbeispiel können die Reaktionsrohre 3 in dem Raum zwischen Trennblech 13 und zweiten Rohrboden 9 mit Katalysatormaterial gefüllt sein.

Der Wärmeträger 14 wird in der Vorwärmzone 11 wieder radial im Gegenstrom zum Reaktionsgas 29 geführt, während er in diesem Ausführungsbeispiel in der Reaktionszone 12 radial im Gleichstrom mit dem Reaktionsgas 29 geführt wird.

In den ringförmigen Umlenkblechen 37 der Reaktionszone 12 sind ähnlich wie im ringförmigen Umlenkblech 21 in der Vorwärmzone 11 Durchtritts- bzw. Teilstromöffnungen 41 zum nächsten Durchströmungsabschnitt 40 ausgebildet, die in radialer Richtung und in Umfangsrichtung vorgegebene Abstände zueinander aufweisen und durch die hindurch Teilströme 14c des Wärmeträgers 14 strömen. Die Teilstromöffnungen 41 weisen zur Reaktorachse hin größer werdende Querschnitte auf, um radial einwärts eine übermäßige Geschwindigkeitserhöhung bei kleiner werdendem Radius zu verhindern und so die Temperaturunterschiede innerhalb einer rohrachsnormalen Querschnittsebene gering zu halten.

Zur Vergleichmäßigung der Temperaturverteilung über den rohrachsnormalen Rohrbündelquerschnitt können in den radial innen und außenliegenden unberohrten Umlenkbereichen Mischer 42 installiert sein, die den Wärmeträgerstrom 14 im Umlenkbereich auch führen.

Wegen der Vielzahl an Umlenkblechen 37, 38 werden zur Verbesserung der Temperaturgleichheit über jeden Querschnitt die Leckströme zwischen den Reaktionsrohren 3 und ihren Durchtrittsbohrungen in den Umlenkblechen 37, 38 durch Eindichten beseitigt, vorzugsweise sind in den scheibenförmigen Umlenkblechen 38 und in den radialen Außenbereichen der ringförmigen Umlenkbleche 37 die Spalte zwischen den Reaktionsrohren 3 und ihren Durchtrittsbohrungen abgedichtet.

In den Figuren 3 bis 13 sind einige Ausführungsbeispiele für punkt- oder linienförmige Strömungseinbauten 34 dargestellt.

Durch solche Strömungseinbauten 34 werden sowohl die Turbulenz im Wärmeträger 14 erhöht als auch die Wärmeübertragungsflächen vergrößert. Ferner können auch die Durchströmungsquerschnitte nennenswert verringert sein.

Die Figuren 3a und 3b zeigen ringförmig ausgebildete Rippen 50, die jeweils ein Reaktionsrohr 3 konzentrisch umschließen und von diesen radial vorragen. In Reaktionsrohr-Längsrichtung sind diese ringförmigen Rippen 50 mit gleichen lichten Abständen 35 zueinander angeordnet. Die ringförmigen Rippen 50 benachbarter Reaktionsrohre 3 sind zueinander in Reaktionsrohr-Längsrichtung versetzt und überlappen sich in Radialrichtung.

Die Figuren 4a und 4b zeigen eine den Figuren 3a und 3b ähnliche rippenförmige Ausbildung der Strömungseinbauten 34. In diesem Ausführungsbeispiel sind jedoch die Rippen als Kreisringabschnitte bzw. blattförmige Abschnitte 51 ausgebildet, die in Umfangsrichtung mit einem vorgegebenen Abstand 52 zueinander angeordnet sind.

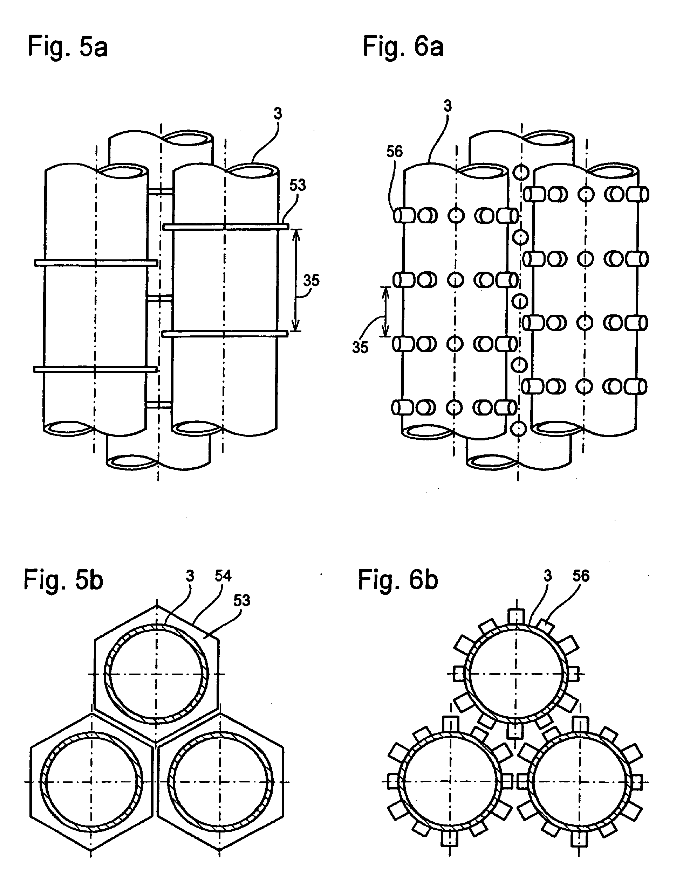

Die Außenkontur der Rippen kann beliebig geformt sein, beispielsweise entsprechend dem Muster der Rohranordnung, wie in den Figuren 5a und 5b dargestellt. Dort weisen die ringförmigen Rippen 53 eine sechseckige Außenkontur 54 auf. In diesem Ausführungsbeispiel ist auch dargestellt, dass sich die Strömungseinbauten in radialer Richtung nicht überlappen müssen.

Wenn sich die Rippen nicht überlappen, vereinfacht sich die Montage der Reaktionsrohre 3 zum Reaktionsrohrbündel, da die Reaktionsrohre 3 für den Zusammenbau axial verschoben werden können. Dieses ist bei sich überlappenden konzentrischen oder spiralförmigen Rippen nicht mehr möglich. Die Reaktionsrohre 3 können in diesen Fällen zum Zusammenbau nur quer zu ihrer Längsrichtung verschoben werden.

Die Überlappung der Rippen in Strömungsrichtung bewirkt dagegen einen besonders guten Verwirbelungs- bzw. Turbulenzerhöhungseffekt.

Punktförmige Strömungseinbauten 34 sind in den Figuren 6a und 6b dargestellt. Die dort gezeigten Strömungseinbauten sind stab- bzw. stiftförmig ausgebildet, wobei die Länge der Stifte 56 so ausgebildet ist, dass sich die Stifte 56 benachbarter Reaktionsrohre nicht überlappen, aber die Reaktionsrohrzwischenräume möglichst weit ausfüllen.

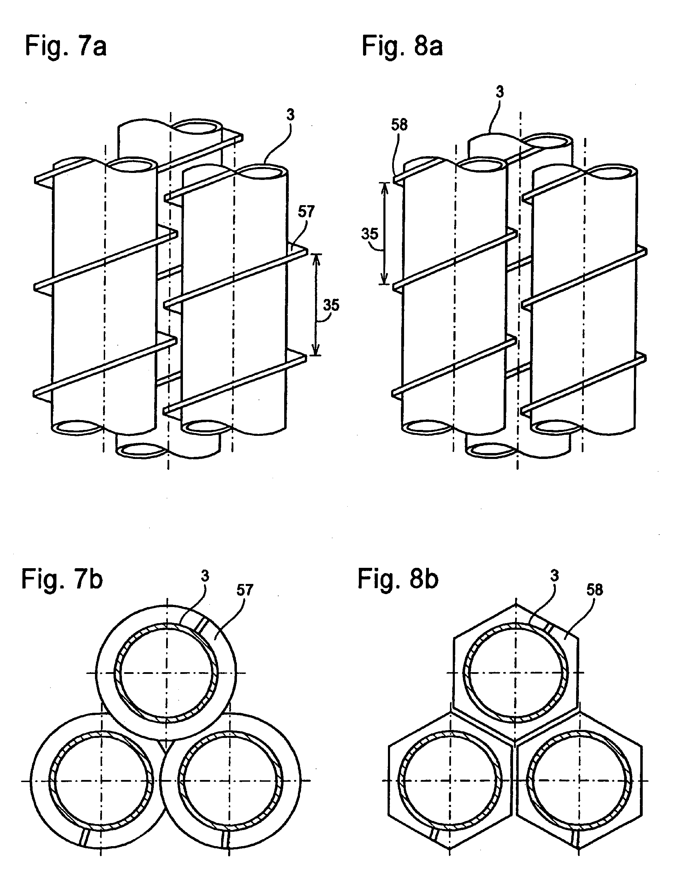

Die Figuren 7a und 7b sowie 8a und 8b zeigen spiralförmig ausgebildete, kontinuierliche und jeweils ein Reaktionsrohr 3 umschließende Rippen 57, 58. Die Außenkontur dieser Rippen 57, 58 ist in der Draufsicht kreisförmig (Figur 7b) bzw. sechseckig (Figur 8b), ähnlich den in den Figuren 3b und 5b dargestellten Rippen 50, 54. Auch spiralförmig ausgebildete Rippen 57, 58 können sich in radialer Richtung überlappen (Figur 7a, 7b) oder mit Abstand voreinander enden (Figur 8a, 8b).

Die Ganghöhe der spiralförmigen Rippen 57, 58 entspricht in etwa dem Abstand der ringförmigen Rippen 50, 54 (Figur 3a, 5b) in Reaktionsrohr-Längsrichtung.

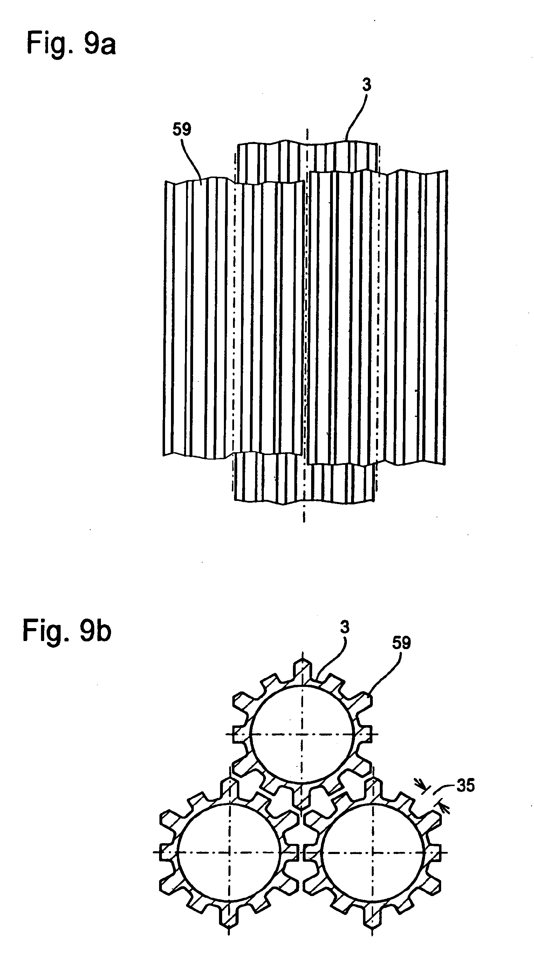

Als weiteres Ausführungsbeispiel sind in den Figuren 9a und 9b Reaktionsrohre 3 mit Längsrippen 59 dargestellt. In Reaktionsrohr-Umfangsrichtung bilden die Außenkonturen der Längsrippen 59 insgesamt ein Sechseck aus. Die Längsrippen 59 benachbarter Reaktionsrohre 3 können in einem vorgegebenen geringen Abstand zueinander enden, wie in Figur 9b dargestellt, oder sie können auch zahnradartig ineinandergreifen, d. h. sich überlappen.

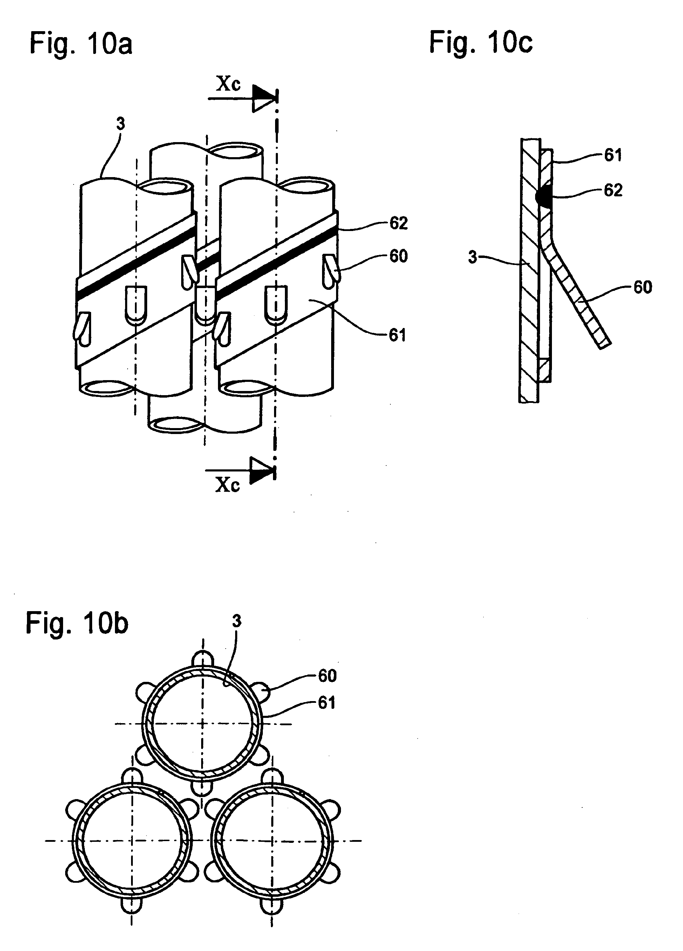

Strömungseinbauten 34 in Form von Blechfahnen bzw. zungenförmigen Rippen sind in den Figuren 10 bis 13 dargestellt.

Die Figuren 10a, 10b und 10c zeigen zungenförmige Blechfahnen 60, die in einem vorgegebenen Abstand zueinander in einem Blechband 61 gestanzt und aus der Blechbandebene herausgebogen sind. Um jedes Reaktionsrohr 3 ist ein solches Blechband spiralförmig gewickelt, so dass die Zungen bzw. Blechfahnen 60 radial abstehen. Die Blechbänder 61 sind an den Reaktionsrohren 3 mittels Schweißnähten 62 befestigt.

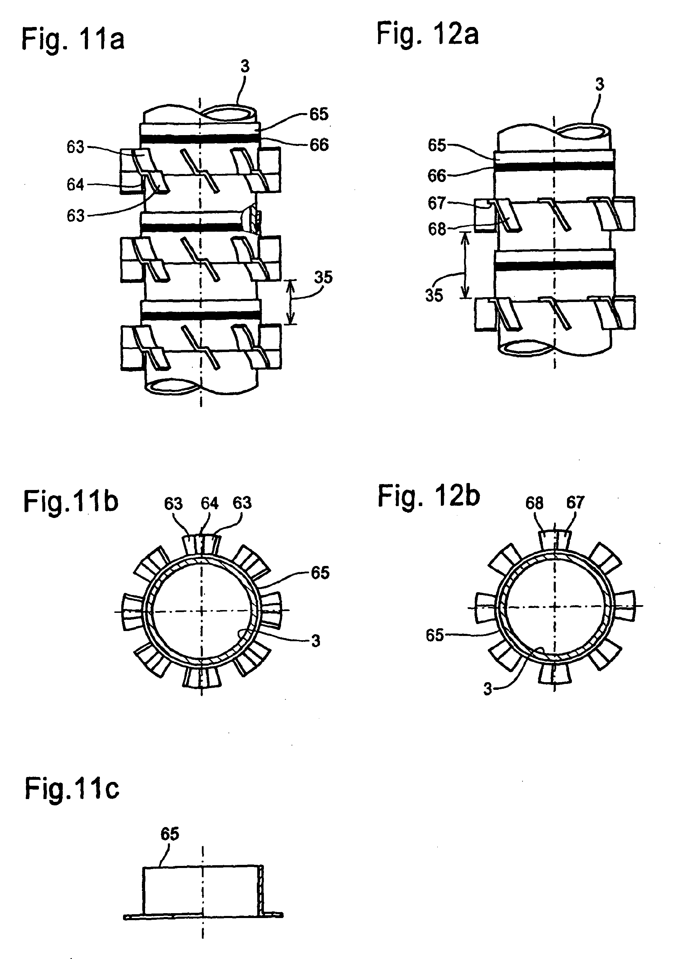

Die Figuren 11a, 11b und 11c zeigen gestanzte Blechfahnen 63, die von einem Mittelabschnitt 64, der sich in radialer Richtung erstreckt, in Reaktionsrohr-Längsrichtung in entgegengesetzte Richtungen so aufgebogen sind, dass sie schräg zur Reaktionsrohr-Längsrichtung verlaufen. Diese zungenförmigen Blechfahnen 63 erstrecken sich in einem vorgegebenen Winkel zur Strömungsrichtung des Wärmeträgers 14, um diesem eine Querstromkomponente aufzuprägen. Der Mittelabschnitt 64 seinerseits ist mit einem Ring bzw. einer Muffe 65 aus einem Blechband einstückig verbunden und von dessen Umfangsfläche um 90° in Radialrichtung nach außen weggebogen. In dem dargestellten Ausführungsbeispiel weist eine solche Muffe 65 acht solcher Blechfahnen 63 auf. Die Muffen bzw. ringförmigen Blechstanzteile 65 werden nacheinander auf die Reaktionsrohre 3 geschoben und an diesen mit einer Schweißnaht 66 befestigt.

Die Figuren 12a und 12b zeigen ein ähnliches Ausführungsbeispiel, bei dem jedoch von einem radial verlaufenden Abschnitt 67 nur in eine Richtung eine zungenförmige Blechfahne 68 in Reaktionsrohr-Längsrichtung weggebogen ist.

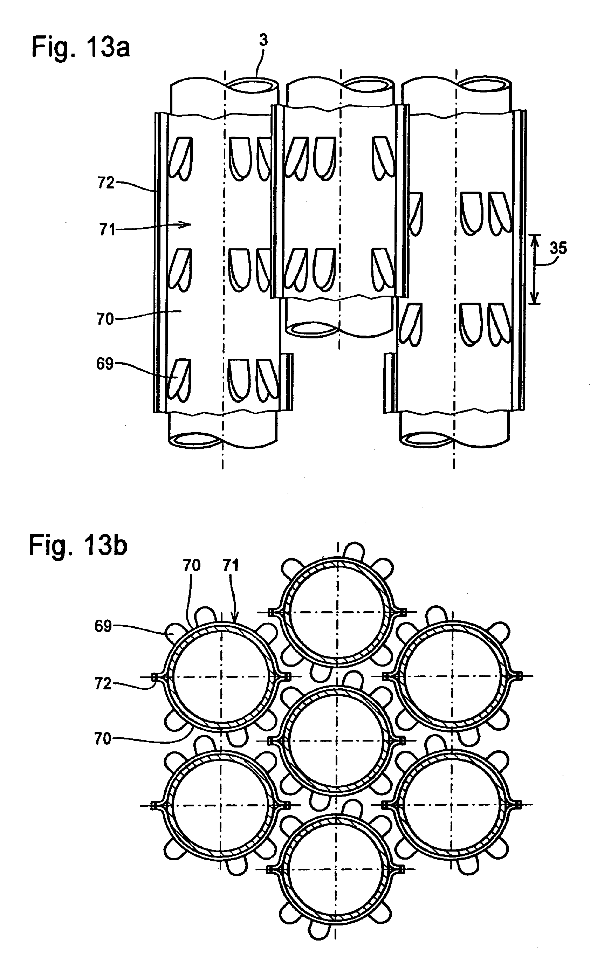

Die in den Figuren 13a und 13b gezeigte Ausführungsform erfindungsgemäßer Strömungseinbauten 34 entspricht den in den Figuren 10a und 10b dargestellten zungenförmigen Blechfahnen 60. In diesem Ausführungsbeispiel sind die Blechfahnen 69 in halbzylinderförmigen Schalen 70 ausgestanzt, deren Innendurchmesser dem Außendurchmesser der Reaktionsrohre 3 entspricht. Jeweils zwei dieser halbzylinderförmigen Schalen 70 werden um ein Reaktionsrohr 3 gelegt und zu einer Muffe 71 verbunden, bevorzugt mittels einer Schweißnaht 72. In dem in den Figuren 13a und 13b dargestellten Ausführungsbeispiel überlappen sich die zungenförmigen Blechfahnen 69 benachbarter Reaktionsrohre 3 in radialer Richtung.

Um einem lokalen Verstopfen einzelner Strömungsquerschnitte durch Verunreinigungen im Wärmeträger 14 vorzubeugen, sollte der lichte Abstand benachbarter Strömungseinbauten 50, 51, 53, 56, 57, 58, 60, 63, 68, 69 bei den Ausführungsbeispielen gemäß Figuren 3 bis 8 und 10 bis 13 mindestens 3 mm betragen. Bei Längsrippen 59, wie in dem Ausführungsbeispiel gemäß Figur 9, ist es ausreichend, wenn der lichte Abstand benachbarter Längsrippen 59 nur in Umfangsrichtung mindestens 3 mm beträgt.

In den Figuren 14 bis 16 sind spiralförmig ausgebildete Strömungseinbauten 34 dargestellt, die nicht ein einzelnes Reaktionsrohr 3 spiralförmig umschließen, sondern die sich über mehrere Reaktionsrohre 3 hinweg erstrecken und von diesen durchdrungen werden. Durch die spiralförmige Strömungsführung wird dem axial in das Rohrbündel 2 eintretenden Wärmeträger 14 eine Querströmungskomponente aufgeprägt, die den Wärmeübergang deutlich erhöht.

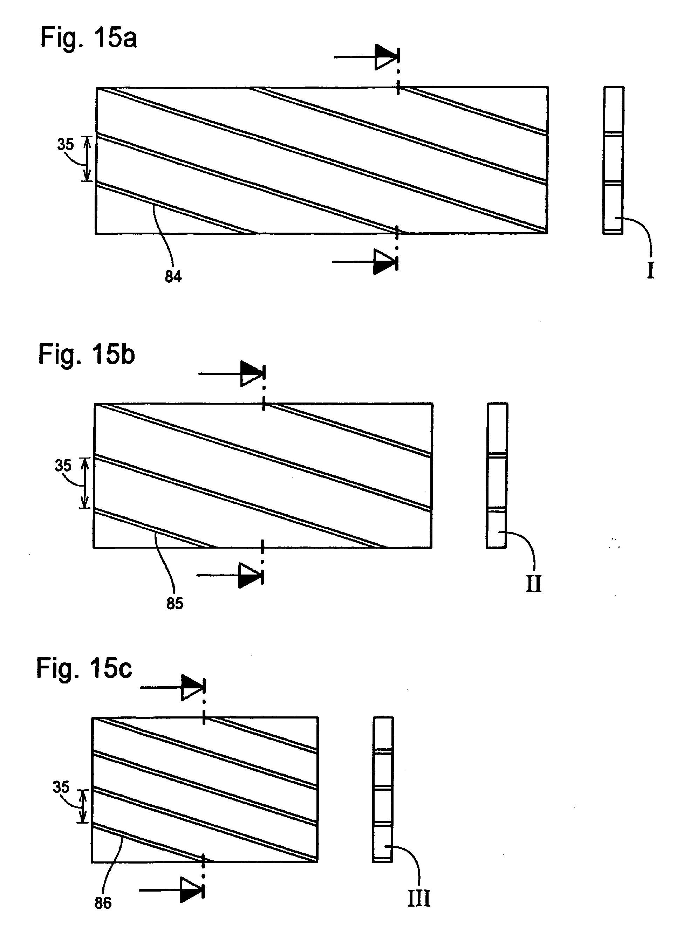

Das Rohrbündel 2 ist durch mehrere konzentrisch ineinanderliegende Trennwände in Ringräume unterteilt, im in den Figuren 14 und 15 dargestellten Ausführungsbeispiel durch drei solcher zylindrischer Trennwände 80, 81, 82, wobei die radial innerste Trennwand 82 den rohrfreien Innenraum 83 umschließt und der Reaktormantel 4 die Außenwand des radial außenliegenden Ringraums bildet. Im dargestellten Ausführungsbeispiel sind auf diese Weise drei Ringräume I, II, III mit jeweils separaten Spiralen 84, 85, 86 ausgebildet.

Figur 14a zeigt in einem Teil-Längsschnitt durch einen Rohrbündelreaktor 1 eine solchermaßen ausgebildete Reaktionszone 12. Die Ringräume I, II, III mit den spiralförmigen Strömungseinbauten 84, 85, 86 sind zwischen zwei Verteilerblechen 87, 88 angeordnet, durch die hindurch der Wärmeträgerstrom 14 in die Ringräume I, II, III und Spiralen 84, 85, 86 eintritt bzw. aus diesen wieder austritt. Die Verteilerbleche 87, 88 weisen Durchtrittsöffnungen 89 auf, die in Umfangsrichtung und in Radialrichtung mit Abstand zueinander angeordnet sind und deren Querschnittsfläche in Radialrichtung variiert, ähnlich wie bei dem Ausführungsbeispiel gemäß Figur 1.

Zusätzlich variieren die Querschnittsflächen der Durchtrittsöffnungen 89 auch in Umfangsrichtung entlang der Ringräume I, II, III, um in deren Ein- und Austrittsbereichen eine gleichmäßige Geschwindigkeitsverteilung zu erreichen.

Wie in Figur 1 sind die Verteilerbleche 87, 88 jeweils auf der Wärmeträgerseite in einem Abstand zum Trennblech 13 bzw. zum zweiten Rohrboden 9 angeordnet. Zwischen Trennblech 13 bzw. zweiten Rohrboden 9 und Verteilerblech 87, 88 sind im Reaktormantel 4 in Umfangsrichtung gleichmäßig verteilte Öffnungen 27, 43 ausgebildet, durch die der Wärmeträger 14 aus der Wärmeträger-Zuleitung 15 und einem Ringkanal 16, 20 in die Reaktionszone 12 eintritt bzw. aus der Reaktionszone in einen Ringkanal 30 und in die Wärmeträger-Ableitung 44 austritt.

Die spiralförmige Strömungsführung ist in jedem Ringraum I, II, III mehrgängig ausgeführt, d. h. in jedem Ringraum befindet sich zwei oder mehr spiralförmige Strömungsleitbleche 84, 85, 86 in gleichem Abstand zueinander. Wie in Figur 14b dargestellt ist, sind im Ringraum I z. B. drei spiralförmige Strömungseinbauten 84 angeordnet. Figur 14c zeigt einen Längsschnitt durch diesen Ringraum I des Rohrbündelreaktors aus Figur 14a. Die spiralförmigen Strömungseinbauten haben nicht nur innerhalb eines Ringraums, sondern auch von Ringraum zu Ringraum die gleiche Steigung, wie in den Figuren 15a, 15b und 15c für die Ringräume I, II und III dargestellt ist. Mit dieser Maßnahme ergibt sich für jeden Strömungsweg innerhalb eines Ringraums als auch von Ringraum zu Ringraum weitestgehend die gleiche Länge.

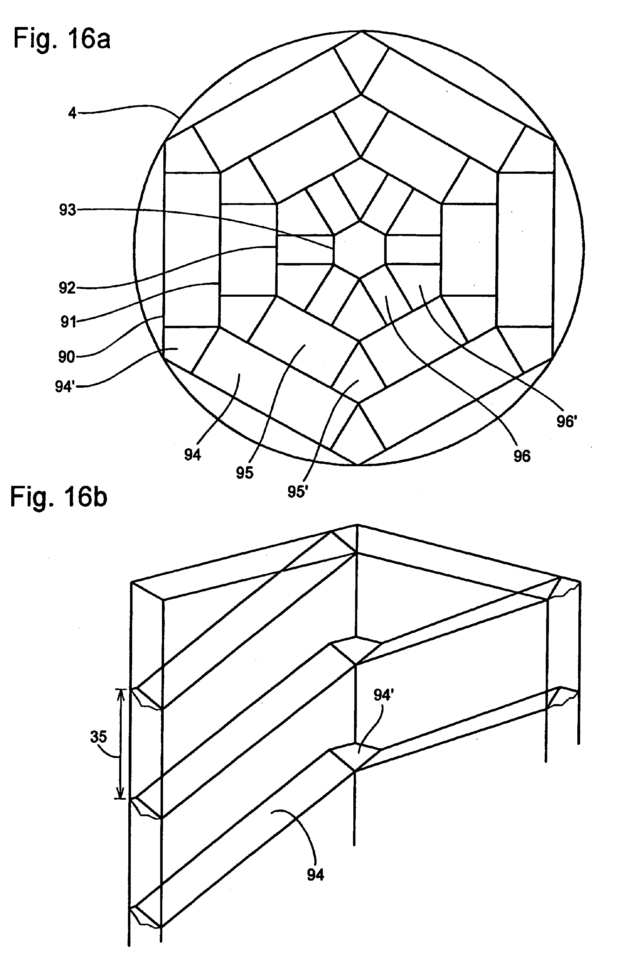

In den Figuren 16a und 16b ist ein Ausführungsbeispiel für spiralförmige Strömungseinbauten dargestellt, bei dem die Trennwände 90, 91, 92, 93 in Form eines Polygonzugs dem Teilungsmuster der Reaktionsrohre 3 folgen. Dies ist eine Variante von Figur 14 mit 60°-segmentweise sich wiederholenden geraden Elementen 94, 94', 95, 95', 96, 96', wodurch sich sechseckige konzentrisch ineinanderliegende Trennwände 90, 91, 92, 93 ergeben. Die gleichmäßige Dreiecksteilung für das Rohrbündel 2 kann bei dieser Ausführungsform erhalten bleiben, wobei vorzugsweise die Eckbereiche 94', 95', 96' solcher polypenzugförmiger Ringräume rohrfrei bleiben.

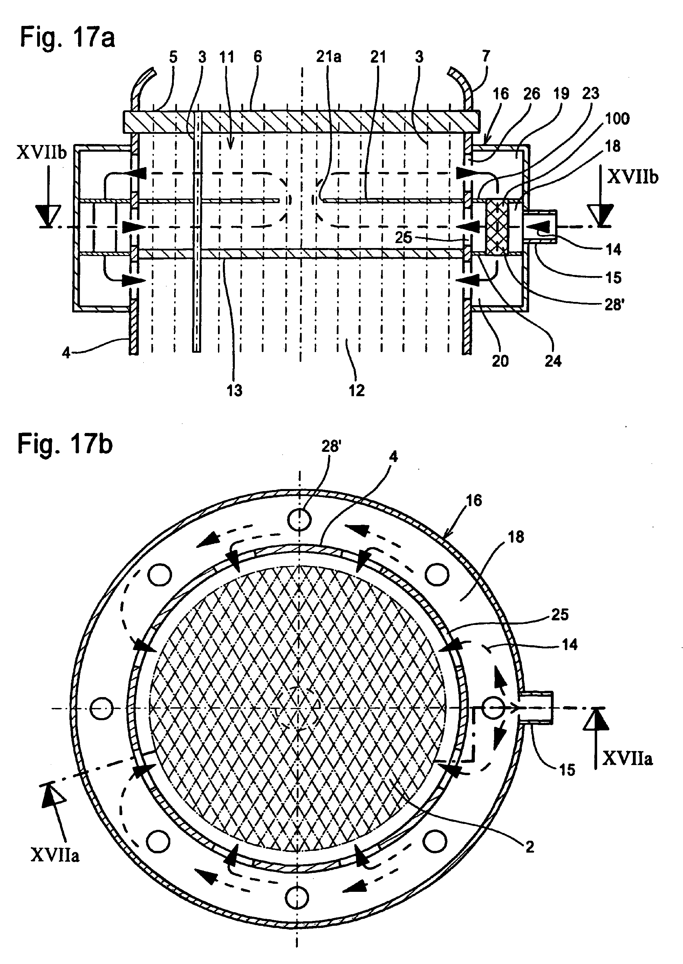

Figur 17a zeigt eine Modifikation der in Figur 1 dargestellten Vorwärmzone 11 und der anschließenden Zuführung des Wärmeträgers 14 in die Reaktionszone 12. Bei dem Ausführungsbeispiel gemäß Figur 17a sind die Durchtrittsöffnungen 22 im ringförmigen Umlenkblech 21 in der Vorwärmzone 11 nicht dargestellt. In den Verbindungskanälen 28' ist jeweils eine statische Mischeinrichtung 100 angeordnet, die den Wärmeträger 14 beim Hindurchströmen durchmischt, so daß der Wärmeträger mit einer gleichmäßigen Temperatur in die Reaktionszone 12 eintritt.

In Figur 17b ist eine Querschnittsansicht durch die Vorwärmzone 11 aus Figur 17a dargestellt. Diese Querschnittsansicht trifft auch auf die in Figur 1 dargestellte Vorwärmzone 11 zu.

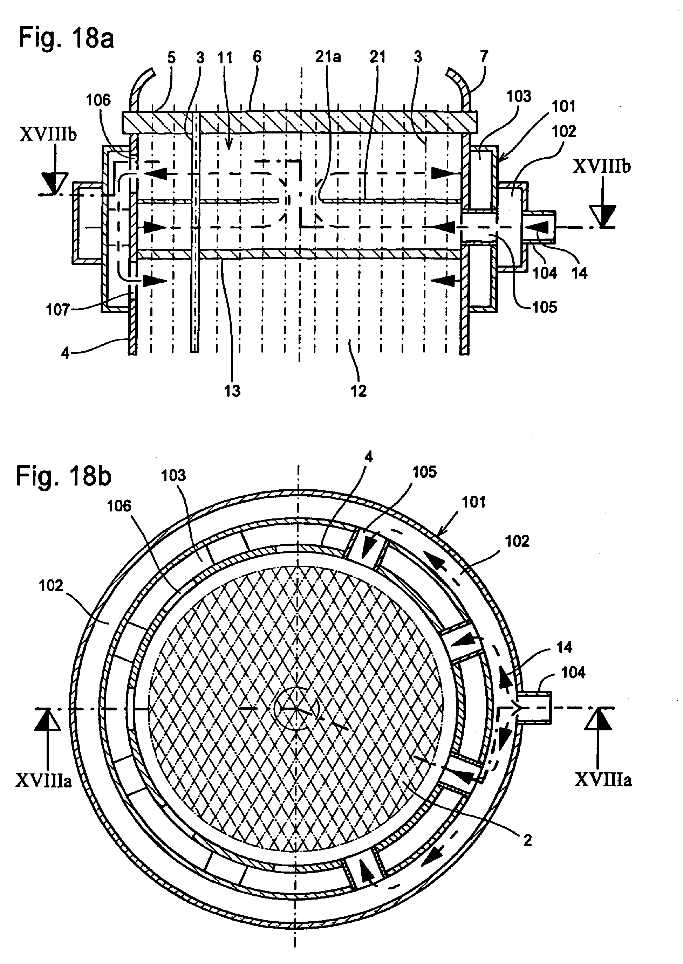

In den Figuren 18a und 18b ist eine alternative Ausführungsform für einen Ringkanal dargestellt, wobei die Ausbildung der Vorwärmzone 11 der Ausführungsform gemäß Figur 17a entspricht. Bei dem in den Figuren 18a und 18b dargestellten Ausführungsbeispiel ist der die Außenseite des Reaktormantels umschließende Ringkanal 101 zweiteilig als ein äußerer Ringkanal 102 und ein innerer Ringkanal 103 ausgebildet.

In den Ringaußenkanal 102 mündet die Wärmeträger-Zuleitung 104. Er steht mit dem Bereich der Vorwärmzone 11 zwischen Trennblech 13 und Umlenkblech 21' durch radiale Verbindungskanäle 105 in Strömungsverbindung. Die Verbindungskanäle 105 erstrecken sich durch den Ringinnenkanal 103 und sind gegen diesen flüssigkeitsdicht abgedichtet. Der Wärmeträger 14 strömt in dem Ringaußenkanal 102 in Umfangsrichtung und durch diese Verbindungskanäle 105 in die Vorwärmzone 11.

Der Ringinnenkanal 103 steht mit dem zwischen dem Umlenkblech 21' und dem ersten Rohrboden 6 befindlichen Bereich der Vorwärmzone 11 durch erste Öffnungen 106 im Reaktormantel 4 in Strömungsverbindung. Durch zweite Öffnungen 107 im Reaktormantel 4 steht der Ringinnenkanal 103 mit dem Anfangsbereich 17 der Reaktionszone 12 nahe dem Trennblech 13 in Strömungsverbindung.

Der Wärmeträger 14 strömt durch die ersten Öffnungen 106 im Reaktormantel 4 aus der Vorwärmzone 11 in den Ringinnenkanal 103, in diesem ein Stück in Reaktionsrohr-Längsrichtung zu den zweiten Öffnungen 107 im Reaktormantel 4 und durch diese hindurch in die Reaktionszone 12.

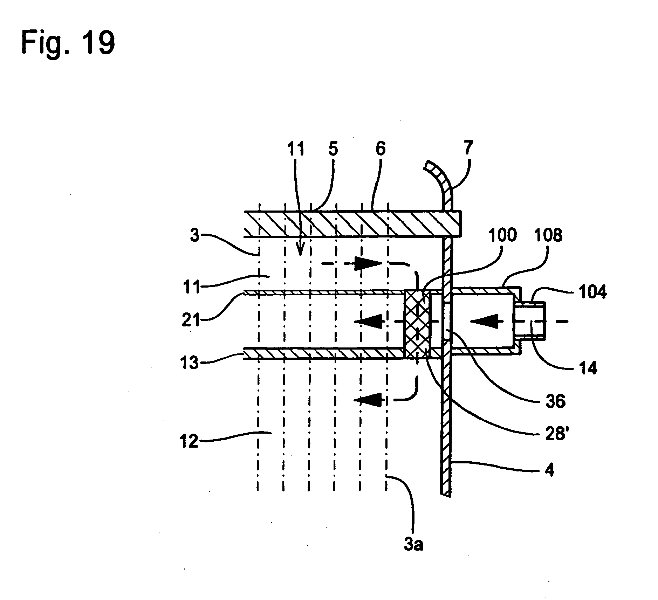

Figur 19 zeigt eine ähnliche Ausbildung der Vorwärmzone 11 und der Zuführung des Wärmeträgers 14 wie in Figur 2 dargestellt, jedoch mit den Modifikationen entsprechend Figur 17a, d. h. in den Verbindungskanälen 28' ist eine statische Mischeinrichtung 100 angeordnet.

Über einen an der Außenseite des Reaktormantels 4 in Umfangsrichtung sich erstreckenden Ringkanal 108, der mittels Öffnungen 36 im Reaktormantel 4 mit der Vorwärmzone 11 im Bereich zwischen Trennblech 13 und Umlenkblech 21 in Strömungsverbindung steht, wird der Wärmeträger 14 der Vorwärmzone 11 zugeführt. Die Verbindungskanäle 28' sind wie bei der Ausführungsform gemäß Figur 2 in einem rohrfreien Raum zwischen den außenliegenden Reaktionsrohren 3a des Rohrbündels 2 und der Innenwandung des Reaktormantels 4 angeordnet.

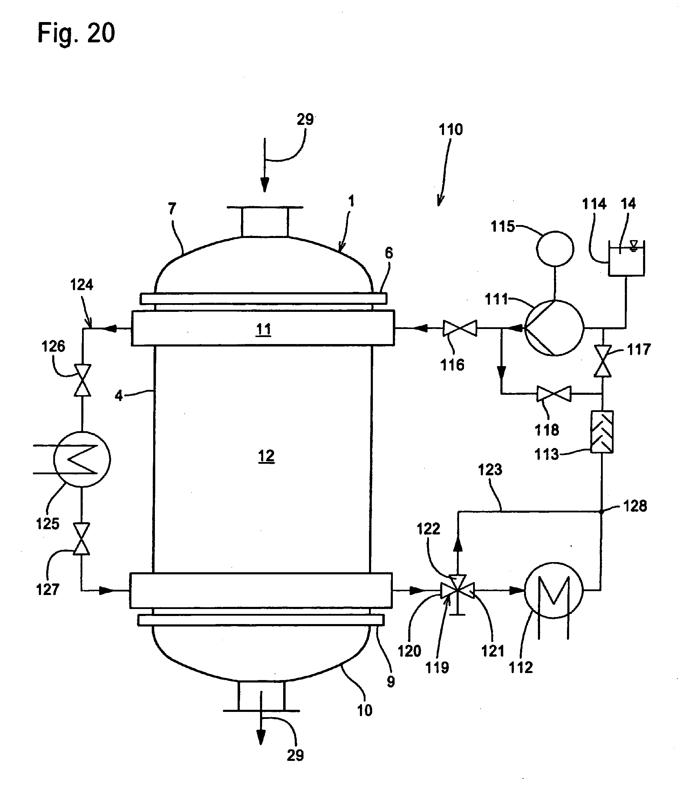

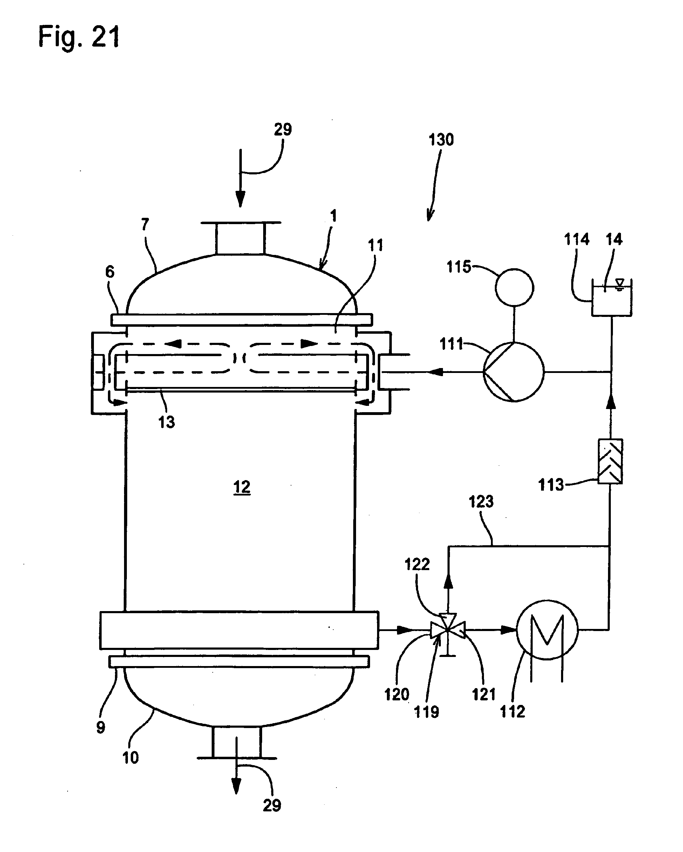

Die Figuren 20 und 21 zeigen Fließbilder möglicher Wärmeträgerkreisläufe für erfindungsgemäße Rohrbündelreaktoren 1.

Der in Figur 20 dargestellte Wärmeträgerkreislauf 110 führt im Hauptstrom durch eine Umwälzpumpe 111, den Rohrbündelreaktor 1, einen Wärmetauscher 112 und eine statische Mischeinrichtung 113. An den Hauptstrom ist ein Wärmeträger-Ausgleichsbehälter 114 angeschlossen. Der Wärmeträger 14 läuft in nur einem Wärmeträgerkreislauf um.

Die Umwälzpumpe 111 ist unmittelbar vor Eintritt des Wärmeträgers 14 in den Rohrbündelreaktor 1 angeordnet und an einen Antriebsmotor 115 angeschlossen. Zur Einstellung der Umwälzmenge des Wärmeträgers 14 ist in Strömungsrichtung vor und nach der Umwälzpumpe jeweils ein Drosselventil 116, 117 angeordnet. Ferner ist parallel zur Umwälzpumpe 111 ein Bypassventil 118 angeordnet, mittels dem die Umwälzmenge des Wärmeträgers 14 ebenfalls eingestellt werden kann.

Zur Einstellung der Temperatur, mit der der Wärmeträger 14 in den Rohrbündelreaktor 1 eintritt, ist im Hauptstrom des Wärmeträgerkreislaufes 110 unmittelbar nach dem Austritt des Wärmeträgers 14 aus dem Rohrbündelreaktor 1 ein Wärmetauscher 112 mit einer Kühl- und/oder Heizeinrichtung angeordnet. Zwischen Rohrbündelreaktor 1 und Wärmetauscher 112 ist ein Dreiwegeventil 119 geschaltet, dessen Eingang 120 mit dem Rohrbündelreaktoraustritt und dessen erster Ausgang 121 mit dem Wärmetauschereintritt verbunden ist. An den zweiten Ausgang 122 des Dreiwegeventils 119 ist ein Bypass 123 zum Wärmetauscher 112 angeschlossen.

Die Drosselquerschnitte des Dreiwegeventils 119 werden so eingestellt, daß die Druckdifferenz zwischen dem Eingang 120 und der Stelle 128 unabhängig vom Durchfluß durch den Wärmetauscher 112 konstant bleibt. Dadurch wird ein konstanter Wärmeträgerstrom 14 durch den Reaktor 1 unabhängig von dessen Last erreicht.

Hinter den Zuläufen von Kühl- und Heizeinrichtungen und vor dem Eintritt in den Rohrbündelreaktor 1, im dargestellten Fall vor der Umwälzpumpe 111, ist eine statische Mischeinrichtung 113 angeordnet, die die Wärmeträgereintrittstemperatur vergleichmäßigt.

Das Reaktionsgas kann ausschließlich in der Vorwärmzone 11 im Rohrbündelreaktor 1 vorgewärmt werden. Zusätzliche außerhalb des Reaktors 1 gelegene Vorwärmeinrichtungen sind nicht erforderlich.

Der Wärmeträger 14 - häufig ein Salzbad - wird mittels der Umwälzpumpe 111 umgewälzt und von dem Wärmetauscher 112 je nach Art des Reaktionsprozesses gekühlt bzw. erwärmt. Er tritt in der Nähe des ersten Rohrbodens 6 in den Reaktormantel 4 ein und in der Nähe des zweiten Rohrbodens 9 aus dem Reaktormantel 4 aus.

Die mittlere Temperatur des Wärmeträgers 14 ist bei dessen Austritt aus der Reaktionszone 12 mindestens 2°C, bevorzugt 5°C, weiter bevorzugt 10°C höher als bei dessen Eintritt in die Reaktionszone 12.

Die Temperaturdifferenz ist durch Einstellen der Umwälzmenge des Wärmeträgers 14 einstellbar.

Von der Umwälzpumpe 111 gelangt der Wärmeträger 14 zunächst in einen Ringkanal am Reaktoreintritt, wo er in bekannter Weise über entsprechend gestaltete im Reaktormantel 4 gelegene Fenster gleichmäßig über den Umfang des Reaktors 1 verteilt wird.

In einem Bypass 124 zur Reaktionszone ist eine zweite Kühl- bzw. Heizeinrichtung 125 angeordnet. Diese Kühl- und Heizeinrichtungen sind nur zum An- bzw. Abfahren des Rohrbündelreaktors 1 erforderlich und im Normalbetrieb zur Verhinderung eines Durchflusses mit Ventilen 126, 127 absperrbar.

Der in Figur 21 dargestellte Wärmeträgerkreislauf 130 ist einfacher ausgebildet. Er weist wieder einen Hauptstrom auf, der durch eine Umwälzpumpe 111, den Rohrbündelreaktor 1, einen Wärmetauscher 112 mit Kühl- bzw. Heizeinrichtung und eine statische Mischeinrichtung 113 führt. Zwischen Reaktor 1 und Kühl- bzw. Heizeinrichtung 112 ist auch hier ein Dreiwegeventil 119 geschaltet, dessen Eingang 120 mit dem Rohrbündelreaktoraustritt und dessen erster Ausgang 121 mit dem Wärmetauschereintritt verbunden ist. An einen zweiten Ausgang 122 ist wieder ein Bypass 123 zum Wärmetauscher 112 angeschlossen. Ebenso ist ein Wärmeträger-Ausgleichsbehälter 114 an den Hauptstrom angeschlossen. Die Einstellung der Wärmeträgermenge erfolgt bei dieser Ausführungsform über eine Drehzahlsteuerung des Antriebsmotors 115 der Umwälzpumpe 111.

Durch die erfindungsgemäßen Maßnahmen ist es möglich, die Temperaturdifferenz zwischen Reaktoreintritt und Reaktoraustritt je nach Last, Katalysatorlebensdauer oder sonstigen Prozeßbedingungen optimal einzustellen und dabei eine ausreichend homogene Temperaturverteilung quer zur Reaktionsrohr-Längsrichtung zu gewährleisten.

Trotz geringer Umwälzmengen wird ein guter Wärmeübergang auf der Wärmeträgerseite erzielt. Die erfindungsgemäßen Maßnahmen bewirken eine Erhöhung der Strömungsgeschwindigkeit und/oder eine Erhöhung der Turbulenz und/oder eine Vergrößerung der Wärmeübertragungsflächen auf der Wärmeträgerseite.

Der auf die Innenfläche der Reaktionsrohre 3 bezogene wärmeträgerseitige Wärmeübergangskoeffizient kann dadurch auf mindestens 1000, vorzugsweise auf mindestens 1500, besonders bevorzugt auf mindestens 2000 W (m²K) eingestellt werden.

Mit einem erfindungsgemäßen Rohrbündelreaktor 1 kann bei Nennlast eine mittlere Temperaturdifferenz des Wärmeträgers 14 zwischen Eintritt in die und Austritt aus der Reaktionszone 12 erreicht werden, die vorzugsweise größer ist als 10°C, besonders bevorzugt größer als 15°C, ohne dass dabei quer zur Reaktionsrohr-Längsrichtung über den Querschnitt des Rohrbündels 2 Temperaturdifferenzen auftreten, die größer sind, als sie bisher im Stand der Technik als annehmbar angesehen werden, insbesondere nicht größer als 10°C.

Bevorzugt beträgt in der Reaktionszone 12 erfindungsgemäßer Rohrbündelreaktoren 1 der Temperaturunterschied im Wärmeträger 14 innerhalb jeder normal zur Längsrichtung der Reaktionsrohre 3 verlaufenden Ebene höchstens 8°C, weiter vorzugsweise höchstens 5°C und besonders bevorzugt höchstens 2°C.

Mit den erfindungsgemäßen Maßnahmen ergibt sich ein günstiges Temperaturprofil für Reaktionen entlang der Reaktionsrohre 3 mit nur einem Wärmeträgerkreislauf, wodurch höhere Umsätze und Produktausbeuten erreicht werden können. Aufgrund der geringen Wärmeträgerumwälzmengen ergeben sich weitere Vorteile, wie kleinere Pumpen, verringerter Energiebedarf für die Umwälzung des Wärmeträgers sowie kleinere Strömungsquerschnitte für die Zu- und Ableitungen.

Da nur ein Wärmeträgerkreislauf erforderlich ist, sind auch die entsprechenden Einrichtungen zum Heizen, Kühlen und Regeln nur für einen Wärmeträgerkreislauf erforderlich.

Ein erfindungsgemäßer Rohrbündelreaktor ist besonders geeignet zur Durchführung von Oxidationsreaktionen, insbesondere zur Herstellung von Phthalsäureanhydrid, Maleinsäureanhydrid, Glyoxal, (Meth)acrolein und (Meth)acrylsäure.

## Patentansprüche

1. Rohrbündelreaktor zur Durchführung exothermer oder endothermer Gasphasenreaktionen, mit einem Rohrbündel katalysatorgefüllter Reaktionsrohre, die von Reaktionsgas durchströmt werden und eine Reaktionszone durchlaufen, in der sie von einem flüssigen Wärmeträger umströmt werden und in der eine Vielzahl von sich quer zur Reaktionsrohr-Längsrichtung erstreckenden Umlenkblechen angeordnet ist, die Bohrungen aufweisen, durch die hindurch sich die Reaktionsrohre erstrecken, **dadurch gekennzeichnet, dass** die Umlenkbleche in Längsrichtung der Reaktionsrohre (3) jeweils mit einem lichten Abstand (35) zueinander angeordnet sind, der höchstens so groß ist, dass das Verhältnis des Durchmessers eines durch die radial außenliegenden Reaktionsrohre (3a) gezogenen Kreises zu jedem lichten Abstand (35) mindestens 13 beträgt.

2. Rohrbündelreaktor nach Anspruch 1, **dadurch gekennzeichnet, dass** die Umlenkbleche ring- und scheibenförmige Umlenkbleche (37, 38) sind.

3. Rohrbündelreaktor nach Anspruch 2, **dadurch gekennzeichnet, dass** in den scheibenförmigen Umlenkblechen (38) zumindest ein Teil der Spalte zwischen den Reaktionsrohren (3) und den Bohrungen abgedichtet ist.

4. Rohrbündelreaktor nach einem der Ansprüche 1 bis 3, **dadurch gekennzeichnet, dass** in den rohrfreien Umlenkbereichen innen und/oder außen Mischeinbauten (42) installiert sind.

5. Rohrbündelreaktor nach einem der Ansprüche 1 bis 4, **dadurch gekennzeichnet, dass** der Wärmeträgerstrom (14) die Reaktionszone (12) im Gleichstrom mit dem Reaktionsgas (29) durchströmt.

6. Rohrbündelreaktor nach einem der Ansprüche 1 bis 5, **dadurch gekennzeichnet, dass** der auf die Innenfläche der Reaktionsrohre (3) bezogene wärmeträgerseitige Wärmeübergangskoeffizient auf mindestens 1.000, vorzugsweise auf mindestens 1.500, besonders bevorzugt auf mindestens 2.000 W/(m²·K) eingestellt ist.

7. Rohrbündelreaktor nach einem der Ansprüche 1 bis 6, **dadurch gekennzeichnet, dass** in der Reaktionszone (12) der Temperaturunterschied im Wärmeträger (14) innerhalb jeder normal zur Längsrichtung der Reaktionsrohre (3) verlaufenden Ebene höchstens 8°C, vorzugsweise höchstens 5°C und besonders bevorzugt höchstens 2°C ist.

8. Rohrbündelreaktor nach einem der Ansprüche 1 bis 7, **dadurch gekennzeichnet, dass** bei Nennlast des Reaktors (1) die mittlere Temperatur des Wärmeträgers (14) beim Austritt aus der Reaktionszone (12) um mindestens 10°C höher ist als bei dessen Eintritt in die Reaktionszone (12).

9. Rohrbündelreaktor nach Anspruch 8, **dadurch gekennzeichnet, dass** die Temperaturdifferenz durch Einstellen der Umwälzmenge des Wärmeträgers (14) einstellbar ist.

10. Rohrbündelreaktor zur Durchführung exothermer oder endothermer Gasphasenreaktionen, nach einem der Ansprüche 1 bis 9, mit einem von einem Reaktormantel umgebenen Rohrbündel mit katalysatorgefüllten Reaktionsrohren, deren eine Enden von einer Gaseintrittshaube und deren andere Enden von einer Gasaustrittshaube überspannt werden und die nahe der Gaseintrittshaube eine Vorwärmzone und anschließend eine Reaktionszone durchlaufen, wobei die Vorwärmzone und die anschließende Reaktionszone im Bereich des Rohrbündels durch ein Trennblech voneinander getrennt sind und beide jeweils von einem Wärmeträgerstrom durchströmt werden, **dadurch gekennzeichnet, dass** das Trennblech (13) mit den Reaktionsrohren (3) weitestgehend flüssigkeitsdicht verbunden ist und im wesentlichen derselbe Wärmeträgerstrom (14) zunächst die Vorwärmzone (11) und dann die anschließende Reaktionszone (12) durchströmt.

11. Rohrbündelreaktor nach Anspruch 10, **dadurch gekennzeichnet, dass** der Wärmeträgerstrom (14) die Vorwärmzone (11) radial im Gegenstrom zum Reaktionsgas (29) durchströmt.

12. Rohrbündelreaktor nach Anspruch 10 oder 11, **dadurch gekennzeichnet, dass** die Vorwärmzone so ausgelegt ist, dass die Temperatur des Reaktionsgases (29) und die des Wärmeträgers (14) beim Eintritt in die Reaktionszone (12) im wesentlichen gleich sind.

13. Rohrbündelreaktor nach einem der Ansprüche 10 bis 12, **dadurch gekennzeichnet, dass** die Reaktionsrohre (3) im Bereich der Vorwärmzone (11) mit einer inerten Partikelschüttung aufgefüllt sind.

14. Rohrbündelreaktor nach einem der Ansprüche 10 bis 13, **dadurch gekennzeichnet, dass** in dem Strömungsweg des Wärmeträgers (14) von der Vorwärmzone (11) zur Reaktionszone (12) radial außerhalb des Rohrbündels (2) Mischeinbauten (100) installiert sind.

15. Rohrbündelreaktor nach einem der Ansprüche 10 bis 14, **dadurch gekennzeichnet, dass** am Eintritt des Wärmeträgers (14) in die Reaktionszone Temperaturmessstellen zur Messung und Regelung der Temperatur des Wärmeträgers (14) angeordnet sind.

16. Anordnung mit einem Rohrbündelreaktor nach einem der Ansprüche 1 bis 15, **dadurch gekennzeichnet, dass** hinter den Zuläufen von Kühl- und Heizeinrichtungen (112) und vor dem Eintritt in den Rohrbündelreaktor (1) eine statische Mischeinrichtung (113) angeordnet ist, die die Wärmeträgereintrittstemperatur vergleichmäßigt.

17. Anordnung mit einem Rohrbündelreaktor nach einem der Ansprüche 1 bis 15, **dadurch gekennzeichnet, dass** im Bypass (124) zum Rohrbündelreaktor (1) angeordnete Kühl- und Heizeinrichtungen (125), die nur zum An- bzw. Abfahren des Rohrbündelreaktors (1) erforderlich sind, im Normalbetrieb zur Verhinderung eines Durchflusses absperrbar sind.

## Claims

1. Tube-bundle reactor for carrying out exothermal or endothermal gas-phase reactions, with a tube bundle of catalyst-filled reaction tubes, through which reaction gas flows and which run through a reaction zone in which a liquid heat transfer medium flows around them and in which are arranged a multiplicity of deflection plates which extend transversely with respect to the reaction-tube longitudinal direction and which have bores through which the reaction tubes extend, **characterized in that** the deflection plates are arranged in each case, in the longitudinal direction of the reaction tubes (3), at a clear distance (35) from one another which is at most such that the ratio of the diameter of a circle drawn through the radially outer reaction tubes (3a) to each clear distance (35) amounts to at least 13.

2. Tube-bundle reactor according to Claim 1, **characterized in that** the deflection plates are ringshaped and disc-shaped deflection plates (37, 38).

3. Tube-bundle reactor according to Claim 2, **characterized in that**, in the disc-shaped deflection plates (38), at least some of the gaps between the reaction tubes (3) and the bores are sealed off.

4. Tube-bundle reactor according to one of Claims 1 to 3, **characterized in that** mixing fittings (42) are installed in the tube-free deflection regions on the inside and/or on the outside.

5. Tube-bundle reactor according to one of Claims 1 to 4, **characterized in that** the heat transfer medium stream (14) flows through the reaction zone (12) in cocurrent with the reaction gas (29).

6. Tube-bundle reactor according to one of Claims 1 to 5, **characterized in that** the heat transfer coefficient on the heat transfer medium side with respect to the inner surface of the reaction tubes (3) is set at at least 1000, preferably at at least 1500, particularly preferably at at least 2000 W/(m²K).

7. Tube-bundle reactor according to one of Claims 1 to 6, **characterized in that**, in the reaction zone (12), the temperature difference in the heat transfer medium (14) within each plane running perpendicularly with respect to the longitudinal direction of the reaction tubes (3) is at most 8°C, preferably at most 5°C and particularly preferably at most 2°C.

8. Tube-bundle reactor according to one of Claims 1 to 7, **characterized in that,** at the nominal load of the reactor (1), the mean temperature of the heat transfer medium (14) is at least 10°C higher at the outlet from the reaction zone (12) than at its inlet into the reaction zone (12).

9. Tube-bundle reactor according to Claim 8, **characterized in that** the temperature difference can be set by setting the circulation quantity of the heat transfer medium (14).

10. Tube-bundle reactor for carrying out exothermal or endothermal gas-phase reactions, according to one of Claims 1 to 9, with a tube bundle surrounded by a reactor casing and having catalyst-filled reaction tubes, the one ends of which are spanned by a gas inlet hood and the other ends of which are spanned by a gas outlet hood and which, near the gas inlet hood, run through a preheating zone and subsequently a reaction zone, the preheating zone and the subsequent reaction zone being separated from one another in the region of the tube bundle by a separation plate, and a heat transfer medium stream flowing in each case through the two zones, **characterized in that** the separation plate (13) is connected to the reaction tubes (3) as far as possible so as to be liquid-tight, and essentially the same heat transfer medium stream (14) flows first through the preheating zone (11) and then through the subsequent reaction zone (12).

11. Tube-bundle reactor according to Claim 10, **characterized in that** the heat transfer medium stream (14) flows through the preheating zone (11) radially in countercurrent to the reaction gas (29).

12. Tube-bundle reactor according to Claim 10 or 11, **characterized in that** the preheating zone is designed such that the temperature of the reaction gas (29) and that of the heat transfer medium (14) at the inlet into the reaction zone (12) are essentially identical.

13. Tube-bundle reactor according to one of Claims 10 to 12, **characterized in that** the reaction tubes (3) are filled with an inert particle bed in the region of the preheating zone (11).

14. Tube-bundle reactor according to one of Claims 10 to 13, **characterized in that** mixing fittings (100) are installed radially outside the tube bundle (2) in the flow path of the heat transfer medium (14) from the preheating zone (11) to the reaction zone (12).

15. Tube-bundle reactor according to one of Claims 10 to 14, **characterized in that** temperature measurement points for measuring and regulating the temperature of the heat transfer medium (14) are arranged at the inlet of the heat transfer medium (14) into the reaction zone.

16. Arrangement having a tube-bundle reactor according to one of Claims 1 to 15, **characterized in that** a static mixing device (113) which equalizes the inlet temperature of the heat transfer medium is arranged downstream of the inflows of cooling and heating devices (112) and upstream of the inlet into the tube-bundle reactor (1).

17. Arrangement having a tube-bundle reactor according to one of Claims 1 to 15, **characterized in that** cooling and heating devices (125) which are arranged in the bypass (124) to the tube-bundle reactor (1) and which are required only for starting up and running down the tube-bundle reactor (1) can be shut off in normal operation in order to prevent a throughflow.

## Revendications

1. Réacteur à faisceau tubulaire pour l'exécution de réaction exothermiques ou endothermiques en phase gazeuse, comprenant un faisceau de tubes de réaction remplis de catalyseur, qui sont traversés par un gaz de réaction et qui traversent une zone de réaction dans laquelle ils sont entourés par un courant de caloporteur liquide et dans laquelle sont agencées une pluralité de tôles de déflexion s'étendant transversalement à la direction longitudinale des tubes de réaction, lesdites tôles présentant des perçages à travers lesquels s'étendent les tubes de réaction, **caractérisé en ce que** les tôles de déflexion sont agencées en direction longitudinale des tubes de réaction (3) avec respectivement une distance libre (35) les unes par rapport aux autres, qui est au maximum aussi grande pour que le rapport du diamètre d'un cercle qui passe à travers les tubes de réaction (3a) situé radialement à l'extérieur sur chaque distance libre (35) s'élève à au moins 13.

2. Réacteur à faisceau tubulaire selon la revendication 1, **caractérisé en ce que** les tôles de déflexion sont des tôles de déflexion (37, 38) en forme annulaire et en forme de disque.

3. Réacteur à faisceau tubulaire selon la revendication 2, **caractérisé en ce que**, dans les tôles de déflexion (38) en forme de disque, au moins une partie des intervalles entre les tubes de réaction (3) et les perçages est étanché.

4. Réacteur à faisceau tubulaire selon l'une des revendications 1 à 3, **caractérisé en ce que** des inserts de mélange (42) intérieurs et/ou extérieurs sont installés dans les zones de déflexion dépourvues de tubes.

5. Réacteur à faisceau tubulaire selon l'une des revendications 1 à 4, **caractérisé en ce que** le courant de caloporteur (14) traverse la zone de réaction (12) en courant parallèle avec le gaz de réaction (29).

6. Réacteur à faisceau tubulaire selon l'une des revendications 1 à 5, **caractérisé en ce que** le coefficient de transmission thermique, côté caloporteur, qui se réfère à la surface intérieure des tubes de réaction (3) est choisi à au moins 1000, de préférence au moins 1500, et de façon particulièrement préférée au moins 2000 W/m²·K).

7. Réacteur à faisceau tubulaire selon l'une des revendications 1 à 6, **caractérisé en ce que** dans la zone de réaction (12), la différence de température dans le caloporteur (14) à l'intérieur de chaque plan s'étendant perpendiculairement à la direction longitudinale des tubes de réaction (3) est au maximum 8° C, de préférence au maximum 5° C et de façon particulièrement préférée au maximum 2° C.

8. Réacteur à faisceau tubulaire selon l'une des revendications 1 à 7, **caractérisé en ce qu'**à la charge nominale du réacteur (1), la température moyenne du caloporteur (14) à la sortie hors de la zone de réaction (12) est d'au moins 10° C plus élevée qu'à son entrée dans la zone de réaction (12).

9. Réacteur à faisceau tubulaire selon la revendication 8, **caractérisé en ce que** la différence de température est réglable en réglant la quantité de caloporteur (14) en recirculation.

10. Réacteur à faisceau tubulaire pour l'exécution de réaction exothermiques ou endothermiques en phase gazeuse selon l'une des revendications 1 à 9, comprenant un faisceau de tubes entouré par une enveloppe de réacteur et constitué de tubes de réaction remplis de catalyseur, une extrémité des tubes étant coiffée par un capot d'entrée de gaz et l'autre extrémité des tubes étant coiffée par un capot de sortie de gaz, et les tubes traversent à proximité du capot d'entrée de gaz une zone de préchauffage et ensuite une zone de réaction, ladite zone de préchauffage et la zone de réaction qui fait suite sont séparées l'une de l'autre dans la région du faisceau tubulaire par une tôle de séparation, et elles sont toutes deux respectivement traversées par un courant de caloporteur, **caractérisé en ce que** la tôle de séparation (13) est reliée aux tubes de réaction (3) le plus largement de façon étanche aux liquides, et essentiellement le même courant de caloporteur (14) traverse tout d'abord la zone de préchauffage (11) et ensuite la zone de réaction (12) qui fait suite.

11. Réacteur à faisceau tubulaire selon la revendication 10, **caractérisé en ce que** le courant de caloporteur (14) traverse la zone de préchauffage (11) radialement à contre-courant par rapport au gaz de réaction (29).

12. Réacteur à faisceau tubulaire selon la revendication 10 ou 11, **caractérisé en ce que** la zone de préchauffage est conçue de telle façon que la température du gaz de réaction (29) et celle du caloporteur (14) à l'entrée dans la zone de réaction (12) sont essentiellement égales.

13. Réacteur à faisceau tubulaire selon l'une des revendications 10 à 12, **caractérisé en ce que** les tubes de réaction (3) sont remplis dans la région de la zone de préchauffage (11) avec une charge de particules inertes.

14. Réacteur à faisceau tubulaire selon l'une des revendications 10 à 13, **caractérisé en ce que** des inserts de mélange (10) sont installés dans le trajet d'écoulement du caloporteur (14) de la zone de préchauffage (11) vers la zone de réaction (12) radialement à l'extérieur du faisceau tubulaire (2).

15. Réacteur à faisceau tubulaire selon l'une des revendications 10 à 14, **caractérisé en ce que** des emplacements de mesure de température, destinés à la mesure et à la régulation de la température du caloporteur (14), sont agencés à l'entrée du caloporteur (14) dans la zone de réaction.

16. Agencement comprenant un réacteur à faisceau tubulaire selon l'une des revendications 1 à 15, **caractérisé en ce qu'**un système de mélange statique (113) est agencé derrière les arrivées de dispositifs de refroidissement et de chauffage (112) et avant l'entrée dans le réacteur à faisceau tubulaire (1), ledit système de mélange égalisant la température d'entrée du caloporteur.

17. Agencement comprenant un réacteur à faisceau tubulaire selon l'une des revendications 1 à 15, **caractérisé en ce que** des dispositifs de refroidissement et de chauffage (125), agencés dans le by-pass (124) vers le réacteur à faisceau tubulaire (1), qui ne sont seulement nécessaires que pour le démarrage et la mise à l'arrêt du réacteur à faisceau tubulaire (1), peuvent être isolés en fonctionnement normal pour empêcher un écoulement traversant.
